(19) Europäisches Patentamt / European Patent Office / Office européen des brevets

(11) **EP 4 737 601 A1**

(12) **EUROPEAN PATENT APPLICATION**
published in accordance with Art. 153(4) EPC

(43) Date of publication:
06.05.2026  Bulletin 2026/19

(21) Application number: 24895856.3

(22) Date of filing: 04.09.2024

(51) International Patent Classification (IPC):
*C22C 21/02* (2006.01)     *C22C 21/04* (2006.01)
*C22C 1/03* (2006.01)      *C22C 1/06* (2006.01)
*H01M 50/224* (2021.01)

(52) Cooperative Patent Classification (CPC):
C22C 1/03; C22C 1/06; C22C 21/02; C22C 21/04;
C22F 1/043; H01M 6/00; H01M 10/00;
H01M 50/224

(86) International application number:
PCT/CN2024/116855

(87) International publication number:
WO 2025/112757 (05.06.2025 Gazette 2025/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.11.2023  CN 202311607993

(71) Applicants:
• Contemporary Amperex Technology Co., Limited
Ningde, Fujian 352100 (CN)
• Shanghai Jiao Tong University
Shanghai 200240 (CN)

(72) Inventors:
• JIA, Jun
Ningde, Fujian 352100 (CN)
• WANG, Qing
Ningde, Fujian 352100 (CN)
• WANG, Xiang
Ningde, Fujian 352100 (CN)
• LIN, Zhiquan
Ningde, Fujian 352100 (CN)
• FENG, Kai
Ningde, Fujian 352100 (CN)
• DU, Shangzhe
Ningde, Fujian 352100 (CN)

(74) Representative: Ziebig Hengelhaupt Intellectual
Property Attorneys
Patentanwaltskanzlei PartGmbB
Leipziger Straße 49
10117 Berlin (DE)

(54) **ALUMINUM ALLOY MATERIAL, ALUMINUM ALLOY STRUCTURAL PART AND PREPARATION METHOD THEREFOR, BATTERY BOX BODY, BATTERY SYSTEM, ELECTRIC DEVICE AND USE**

(57)     An aluminum alloy material, an aluminum alloy structural component, a preparation method of an aluminum alloy structural component, a battery box, a battery system, an electric apparatus (6), and an application are provided. By mass percentage, the aluminum alloy material includes silicon element, copper element, titanium element, magnesium element, zinc element, manganese element, strontium element, a matrix element Al, and unavoidable impurity elements. The aluminum alloy material includes no $Al_2Cu$ phase or includes a small amount of $Al_2Cu$ phase.

FIG. 1

## Description

### CROSS-REFERENCE TO RELATED APPLICATIONS

This application claims priority to Chinese Patent Application No. CN2023116079934, filed on November 27, 2023, entitled "ALUMINUM ALLOY MATERIAL, ALUMINUM ALLOY STRUCTURAL COMPONENT AND PREPARATION METHOD THEREOF, BATTERY BOX, BATTERY SYSTEM, ELECTRIC APPARATUS, AND APPLICATION", which is incorporated herein by reference in its entirety.

### TECHNICAL FIELD

This application relates to the field of aluminum alloy material technologies, further relates to the field of battery box material technologies, and more further relates to an aluminum alloy material, an aluminum alloy structural component, a preparation method of an aluminum alloy structural component, a battery box, a battery system, an electric apparatus, and an application.

### BACKGROUND

The statements herein only provide background information related to this application and do not necessarily constitute the prior art.

A battery box is a key component of a battery, playing an important role in protecting the battery. For a battery containing an electrolyte, a battery box is required not only to have good mechanical properties to reduce damage to the battery upon impact but also to have certain corrosion resistance to extend the service life of the battery. The corrosion resistance of current aluminum alloy materials needs further improvement.

### SUMMARY

According to various implementations and embodiments of this application, an aluminum alloy material, an aluminum alloy structural component and preparation method thereof, a battery box, a battery system, an electric apparatus, and an application are provided in this application, where the aluminum alloy material has good mechanical properties and excellent corrosion resistance, can be used as a main material of a battery box, and is conducive to is conducive to extending the service life of the battery box.

According to a first aspect, this application provides an aluminum alloy material, including silicon (Si) element, copper (Cu) element, titanium (Ti) element, magnesium (Mg) element, zinc (Zn) element, manganese (Mn) element, strontium (Sr) element, a matrix element Al, and unavoidable impurity elements, where the aluminum alloy material includes no $Al_2Cu$ phase or a small amount of $Al_2Cu$ phase, for example, a mass fraction of the $Al_2Cu$ phase in the aluminum alloy material is low (for example, $\leq 1.3\%$).

In some implementations, the aluminum alloy material includes the following constituent elements: 6% to 11% of Si, 0.5% to 0.9% of Cu, 0.1% to 0.4% of Ti, 0.2% to 0.6% of Mg, 0.25% to 0.6% of Zn, 0.5% to 1.1% of Mn, 0.01% to 0.05% of Sr, a matrix element Al, and unavoidable impurity elements; where the aluminum alloy material includes no $Al_2Cu$ phase or a small amount of $Al_2Cu$ phase, for example, a content of the $Al_2Cu$ phase is less than or equal to 1.3%. In some implementations, an aluminum alloy material is provided, which includes, by mass percentage, the following constituent elements: 6% to 11% of Si, 0.5% to 0.9% of Cu, 0.1% to 0.4% of Ti, 0.2% to 0.6% of Mg, 0.25% to 0.6% of Zn, 0.5% to 1.1% of Mn, 0.01% to 0.05% of Sr, a matrix element Al, and unavoidable impurity elements; where the aluminum alloy material includes or does not include an $Al_2Cu$ phase, optionally, a mass fraction of the $Al_2Cu$ phase in the aluminum alloy material is less than or equal to 1.3%.

The aluminum alloy material uses aluminum (Al) as a matrix element, and includes silicon (Si) element, copper (Cu) element, titanium (Ti) element, magnesium (Mg) element, zinc (Zn) element, manganese (Mn) element, and strontium (Sr) element. By controlling the constituent elements of the aluminum alloy material within the aforementioned content ranges, the matrix element Al in the aluminum alloy material forms an $\alpha$-Al matrix phase, where the matrix phase is mainly distributed in a form of near-equiaxed crystals, and the Si element can form an Al-Si eutectic phase with the $\alpha$-Al matrix phase, providing good basic mechanical properties. The introduction of the Cu element may form a bone-like or needle-like $Al_2Cu$ phase, where the $Al_2Cu$ phase has a certain strengthening effect. An increase in Cu content is conducive to enhancing the mechanical strength of the material, for example, altering the morphology of an impurity phase by being combined with the impurity phase so as to reduce deterioration to the mechanical properties caused by the impurity phase. However, a high Cu content is likely to reduce the corrosion resistance of the aluminum alloy material and is also likely to reduce an elongation of the aluminum alloy material. The $Al_2Cu$ phase has a more positive potential, and a matrix phase with a high Cu content also has a more positive potential. In this case, a matrix phase with a low Cu content serves as a cathode phase to form a local electrochemical microcell with a nearby Cu-rich matrix phase and the $Al_2Cu$ phase, causing continuous corrosion of a matrix phase portion of a Cu-lack solid solution. The content of the $Al_2Cu$ phase is substantially linearly related to the Cu content, and by designing a relatively low copper content, a proportion of the $Al_2Cu$ phase can be reduced, thereby improving the corrosion resistance and elongation of the material. In addition, in the aluminum alloy material provided above, a strengthening effect can be provided by using only a small amount of Cu element, without causing any adverse effect or causing a minimal adverse effect on the corrosion resistance. The introduction of the Ti element can form a circular or near-elliptical precipitated phase, where the precipitated phase can serve as a non-spontaneous nucleation site during crystallization, providing a certain grain refinement effect, providing a strengthening effect, and improving the elongation. The introduction of the Mg element and the Zn element can enhance the strength of the aluminum alloy material by forming a solid solution and strengthening precipitation. The Sr element is soluble in the matrix phase, where Sr can alter a solidification process during casting, playing a modification role on alloy phases of the aluminum alloy material, and modifying an Al-Si eutectic structure into a fine fibrous form, thereby enhancing the mechanical strength. The Mn element can contribute to a strengthening effect of the Mg element and make precipitated phases uniformly distributed. In addition, the introduction of the Mn element facilitates a demold release process during casting and can be combined with impurity elements to reduce the deterioration to the corrosion resistance of the aluminum alloy material caused by the impurity elements. By designing element composition and element content in the aluminum alloy material, the prepared aluminum alloy material can have a special microstructure, where multiple synergistic effects among the elements can effectively improve the corrosion resistance of the aluminum alloy material as well as enable the aluminum alloy material to have good mechanical properties, with improvements in both mechanical strength and ductility. By reasonably setting the contents of the Cu element, the Mg element, the Zn element, and other elements, a foundation can be laid for the aluminum alloy material to have good mechanical properties such as good tensile strength and hardness. Further, by controlling the contents of the Cu element, the Ti element, and the Sr element in the aluminum alloy material, the corrosion resistance of the aluminum alloy material can be significantly improved.

Based on any suitable implementation of this application, further, in some implementations, the aluminum alloy material satisfies one or two of the following characteristics:

a mass percentage of the Cu element in the aluminum alloy material is 0.5% to 0.8%; and
the aluminum alloy material includes an $Al_2Cu$ phase, where a mass fraction of the $Al_2Cu$ phase in the aluminum alloy material is 0.1% to 1.3%.

Based on any suitable implementation of this application, further, in some implementations, the aluminum alloy material satisfies one or two of the following characteristics:

a mass percentage of the Cu element in the aluminum alloy material is 0.6% to 0.8%; and
the aluminum alloy material includes an $Al_2Cu$ phase, where a mass fraction of the $Al_2Cu$ phase in the aluminum alloy material is 0.8% to 1.3%.

By adjusting the mass percentage of the Cu element in the aluminum alloy material, a content of the $Al_2Cu$ phase can be controlled. Controlling the content of the $Al_2Cu$ phase within the aforementioned ranges is more conducive to allowing the aluminum alloy material to achieve good mechanical properties and excellent corrosion resistance, is more conducive to achieving excellent corrosion resistance, and also allows the aluminum alloy material to have good mechanical strength and ductility.

Based on any suitable implementation of this application, further, in some implementations, the aluminum alloy material includes a fibrous Al-Si eutectic structure; and the aluminum alloy material includes an $Al_3Ti$ strengthening phase.

In the aluminum alloy material, the $\alpha$-Al matrix phase and the Si phase form an Al-Si eutectic phase, where the eutectic phase is mainly distributed as a fine fibrous structure between $\alpha$-Al grains, which is conducive to enhancing the mechanical strength of the matrix phase. The Ti element can form a circular or near-elliptical $Al_3Ti$ precipitated phase, where the precipitated phase can serve as a non-spontaneous nucleation site during crystallization, providing a certain grain refinement effect and providing a strengthening effect. In addition, improvements in second phase structure distribution and fine grain strengthening are both conductive to improving the ductility.

Based on any suitable implementation of this application, further, in some implementations, the aluminum alloy material satisfies one, two, or three of the following characteristics:

a mass percentage of the Si element in the aluminum alloy material is 6.5% to 11%;
a mass percentage of the Ti element in the aluminum alloy material is 0.2% to 0.4%; and
a mass fraction of the $Al_3Ti$ strengthening phase in the aluminum alloy material is 0.3% to 2%.

Based on any suitable implementation of this application, further, in some implementations, the aluminum alloy material satisfies one, two, or three of the following characteristics:

the mass percentage of the Si element in the aluminum alloy material is 8% to 11%;
the mass percentage of the Ti element in the aluminum alloy material is 0.25% to 0.4%; and
the mass fraction of the $Al_3Ti$ strengthening phase in the aluminum alloy material is 0.3% to 1%, optionally 0.35% to 0.6%.

By adjusting the content of the Si element, a morphology of the Al-Si eutectic structure can be controlled, and by adjusting a content of the Ti element, a content of the $Al_3Ti$ strengthening phase can be controlled. By adjusting one or more of these content parameters, the mechanical properties of the aluminum alloy material can be adjusted. The content parameters being within the aforementioned ranges is conducive to providing good mechanical strength while reducing the Cu content.

Based on any suitable implementation of this application, further, in some implementations, the aluminum alloy material includes or does not include an $Mg_2Si$ phase, where a mass fraction of the $Mg_2Si$ phase in the aluminum alloy material is less than or equal to 0.05%, optionally 0%.

Based on any suitable implementation of this application, further, in some implementations, the aluminum alloy material satisfies one, two, or three of the following characteristics:

a mass percentage of the Mg element in the aluminum alloy material is 0.3% to 0.6%;
a mass percentage of the Zn element in the aluminum alloy material is 0.3% to 0.6%; and
a mass ratio of the Mg element to the Zn element in the aluminum alloy material is 1:(1.1 to 1.3).

Based on any suitable implementation of this application, further, in some implementations, the aluminum alloy material satisfies one or two of the following characteristics:

the mass percentage of the Mg element in the aluminum alloy material is 0.3% to 0.5%;
the mass percentage of the Zn element in the aluminum alloy material is 0.4% to 0.6%; and
the mass ratio of the Mg element to the Zn element in the aluminum alloy material is 1:(1.1 to 1.25).

The introduction of the Mg element may also produce an $Al_5Cu_2Mg_8Si_{16}$ phase, which can provide a high-temperature strengthening effect. The $Mg_2Si$ phase can also provide a strengthening effect on the aluminum alloy, but the $Mg_2Si$ phase is a strong cathode phase, which tends to accelerate matrix corrosion, causing deterioration to the corrosion resistance of the aluminum alloy material. In the aluminum alloy material system provided by this application, the $Mg_2Si$ phase typically begins to precipitate when the Mg content exceeds approximately 1.2wt%. By controlling the Mg content, precipitation behavior of the $Mg_2Si$ phase can be controlled, allowing the $Mg_2Si$ phase formed in an intermediate process to be dissolved, resulting in no or very little $Mg_2Si$ phase in the final aluminum alloy material, which is conducive to reducing adverse effects on the corrosion resistance while leveraging the strengthening effect of the Mg element.

By adjusting the Zn content, a solid solution strengthening and precipitation strengthening effect of the Zn element on the aluminum alloy material can be controlled.

Controlling a mass ratio of the Mg element to the Zn element within the aforementioned range is conducive to providing a synergistic strengthening effect.

Controlling at least one of the Mg content and the Zn content within the aforementioned ranges is more conducive to allowing the aluminum alloy material to achieve good mechanical properties and excellent corrosion resistance.

Based on any suitable implementation of this application, further, in some implementations, the unavoidable impurity elements include Fe element.

Based on any suitable implementation of this application, further, in some implementations, the aluminum alloy material satisfies one or two of the following characteristics:

a mass percentage of the Mn element in the aluminum alloy material is 0.7% to 1.1%, optionally 0.8% to 1.1%; and
the aluminum alloy material includes or does not include an AlSiMnFe phase, where a mass fraction of the AlSiMnFe phase in the aluminum alloy material is less than or equal to 0.2%, optionally less than or equal to 0.1%; and optionally, the aluminum alloy material includes the AlSiMnFe phase.

During casting of the aluminum alloy, an Fe impurity is often unavoidably present in the formed aluminum alloy, where the Fe impurity can form a needle-like AlSiMnFe phase.

The addition of the Mn element can provide a strength enhancing effect. The Mn element mainly enhances the strength of the matrix Al by being dissolved in the matrix Al as a solid solution through lattice distortion, and the produced AlSiMnFe phase also has a certain strengthening effect.

Due to a large contact area and a large potential difference between the AlSiMnFe phase and the $\alpha$-Al matrix, local galvanic corrosion may occur.

A small amount of Fe (for example, the Fe content is less than or equal to 0.7wt%) facilitates demold release during the casting process, but a high Fe content tends to reduce the corrosion resistance of the aluminum alloy material. Controlling the Fe content within a low content range is conducive to reducing adverse effects of Fe on the corrosion resistance.

In addition, the introduction of the Cu element can transform a portion of the needle-like AlSiMnFe phase into dendritic AlSiMnFeCu, and is also condeucive to reducing deterioration to the corrosion resistance caused by the needle-like AlSiMnFe phase.

By adjusting the content of the Mn element, the content of the needle-like AlSiMnFe phase can be controlled. By controlling the content of the AlSiMnFe phase, a comprehensive performance of corrosion resistance and mechanical properties of the aluminum alloy material can be improved.

Based on any suitable implementation of this application, further, in some implementations, a mass proportion of the Sr element in the aluminum alloy material is 200 ppm to 500 ppm.

By adjusting the content of the Sr element, a modification effect of the Sr element on alloy phases can be controlled. Controlling the Sr content within a more suitable range is more conducive to optimizing the mechanical properties of the aluminum alloy material.

Based on any suitable implementation of this application, further, in some implementations, by mass percentage, the aluminum alloy material includes the following constituent elements: 6% to 11% of Si, 0.5% to 0.9% of Cu, 0.1% to 0.4% of Ti, 0.3% to 0.6% of Mg, 0.3% to 0.6% of Zn, 0.5% to 1.1% of Mn, 0.01% to 0.05% of Sr, unavoidable impurity elements, and the balance of a matrix element Al.

Based on any suitable implementation of this application, further, in some implementations, by mass percentage, the aluminum alloy material includes the following constituent elements: 6.5% to 11% of Si, 0.5% to 0.8% of Cu, 0.2% to 0.4% of Ti, 0.3% to 0.6% of Mg, 0.3% to 0.6% of Zn, 0.7% to 1.1% of Mn, 0.02% to 0.05% of Sr, unavoidable impurity elements, and the balance of a matrix element Al.

Based on any suitable implementation of this application, further, in some implementations, by mass percentage, the aluminum alloy material includes the following constituent elements: 8% to 11% of Si, 0.6% to 0.8% of Cu, 0.25% to 0.4% of Ti, 0.3% to 0.5% of Mg, 0.4% to 0.6% of Zn, 0.8% to 1.1% of Mn, 0.03% to 0.05% of Sr, unavoidable impurity elements, and the balance of a matrix element Al.

Adjusting types and contents of the elements in the aluminum alloy material is more conducive to allowing the aluminum alloy material to achieve good mechanical properties and excellent corrosion resistance.

According to a second aspect of this application, an aluminum alloy structural component is provided, which is a formed body made from the aluminum alloy material according to the first aspect.

According to a third aspect of this application, a preparation method of an aluminum alloy structural component is provided, including the following steps:

> heating and melting an aluminum ingot, adding ingredients determined according to a nominal composition of the aluminum alloy material according to the first aspect in the form of intermediate alloys, performing melting and slag removal to prepare a refined aluminum alloy melt;
> performing cast molding on the refined aluminum alloy melt to prepare an aluminum alloy ingot; and
> performing heat treatment and cooling on the aluminum alloy ingot to obtain the aluminum alloy structural component.

The aluminum alloy structural component, as a formed body of the aluminum alloy material according to the first aspect, can have good mechanical properties and excellent corrosion resistance, and can be used as an aluminum alloy structural component in a battery box, effectively extending the service life of the battery box. The aluminum alloy structural component can be prepared by using an aluminum ingot to provide a matrix element, supplemented by corresponding alloy elements through melting, slag removal, cast molding, heat treatment, and cooling. The shape and size of the aluminum alloy structural component can be controlled by selecting a mold of a corresponding shape and size during the cast molding step. It can be understood that the shape and size of the cooled structural component can also be adjusted to obtain an aluminum alloy structural component of a target shape and size, for example, using methods including but not limited to sandblasting and polishing.

According to a fourth aspect of this application, a battery box is provided, where the battery box satisfies at least one of the following characteristics:

> at least part of structural components in the battery box include the aluminum alloy material according to the first aspect;
> the battery box includes the aluminum alloy structural component according to the second aspect; and
> the battery box includes an aluminum alloy structural component prepared by the preparation method of an aluminum alloy structural component according to the third aspect.

The battery box can provide protection for an internal battery cell. On one hand, the battery box needs to have good mechanical strength to reduce the degree of damage to the battery upon impact. On the other hand, the battery box is susceptible to damage caused by galvanic corrosion during storage and battery cycling. Therefore, the battery box needs to have a certain level of corrosion resistance. A battery box made of the aforementioned aluminum alloy material or aluminum alloy structural component can meet both the requirements for mechanical properties and corrosion resistance of the battery box.

According to a fifth aspect of this application, a battery system is provided, including the battery box according to the fourth aspect and a battery cell located inside the battery box.

Based on any suitable implementation of this application, further, in some embodiments, the battery cell includes a liquid electrolyte.

According to a sixth aspect of this application, an electric apparatus is provided, including at least one of the aluminum alloy material according to the first aspect, the aluminum alloy structural component according to the second aspect, an aluminum alloy structural component prepared by the preparation method of an aluminum alloy structural component according to the third aspect, the battery box according to the fourth aspect, and the battery system according to the fifth aspect.

Using the aforementioned aluminum alloy material, the aforementioned aluminum alloy structural component, or a battery box including the aforementioned aluminum alloy material or aluminum alloy structural component in one or more of the battery system and the electric apparatus helps to improve the reliability and service life of the battery system and electric apparatus, not only reducing the degree of damage to the battery upon impact but also improving the corrosion resistance of the battery box, including but not limited to improving the resistance to galvanic corrosion.

When the battery cell in the battery system includes a liquid electrolyte, higher requirements are imposed on the corrosion resistance of the battery box, and the aforementioned battery system and electric apparatus are more likely to meet storage and usage requirements.

According to a seventh aspect of this application, an application of the aluminum alloy material according to the first aspect in preparation of at least one of an aluminum alloy structural component, a battery box, a battery system, and an electric apparatus is provided.

The details of one or more implementations and embodiments of this application are set forth in the accompanying drawings and description below. Other features, objectives, and advantages of this application will become apparent from the description, accompanying drawings, and claims.

BRIEF DESCRIPTION OF DRAWINGS

To better describe and illustrate the implementations, embodiments, or examples provided by this application, reference may be made to one or more accompanying drawings. The additional details or examples used to describe the accompanying drawings should not be considered as limiting the scope of any of the disclosed applications, the currently described implementations, embodiments, or examples, or the best mode of these applications as currently understood. Moreover, identical reference numerals denote identical components throughout all the accompanying drawings. It should also be noted that the accompanying drawings are drawn in a simplified form, solely for the convenience and clarity of assisting in the explanation of this application. The various dimensions of each component shown in the accompanying drawings are arbitrarily depicted, may be accurate, or may not be drawn to actual scale. For example, to make the illustration clearer, some dimensions of components in the accompanying drawings are appropriately enlarged. Unless otherwise specified, the components in the accompanying drawings are not drawn to scale. This application does not limit the dimensions of each component.

In the accompanying drawings:

FIG. 1 is a metallographic structure diagram of an aluminum alloy material according to an embodiment of this application.

FIG. 2 is an X-ray diffraction (XRD) pattern of an aluminum alloy material according to an embodiment of this application.

FIG. 3 shows a microstructure and element distribution of an aluminum alloy material according to an embodiment of this application.

FIG. 4 is an SEM-EDS image of an aluminum alloy material according to an embodiment of this application, which is a point scan image of a field emission scanning electron microscope FESEM+EDS (with an energy dispersive spectrometer), with three scanned points identified.

FIG. 5 is a curve showing changes of mass fraction, elastic modulus, thermal conductivity, and density of an aluminum alloy material with temperature according to an embodiment of this application, where the mass fraction refers to a mass fraction of the aluminum alloy material at different temperatures relative to an initial mass of the aluminum alloy material in an unheated state, reflecting a thermal weight loss of the aluminum alloy material.

FIG. 6 is a result of an alternating-current impedance test of an aluminum alloy material according to an embodiment of this application.

FIG. 7 is an equivalent circuit diagram of fitting in the alternating-current impedance test of the aluminum alloy material in FIG. 5.

FIG. 8 is a potentiodynamic polarization curve of an aluminum alloy material according to an embodiment of this application, with a horizontal axis representing a chemical potential (measured in V) and a vertical axis representing a current density (A/cm$^2$).

FIG. 9 is a macroscopic surface morphology diagram of an aluminum alloy material at different corrosion times in a salt spray corrosion test according to an embodiment of this application.

FIG. 10 is a schematic diagram of sample dimensions for a tensile test of an aluminum alloy material according to an embodiment of this application.

FIG. 11 is a schematic diagram of a battery module according to an embodiment of this application.

FIG. 12 is a schematic diagram of a battery pack according to an embodiment of this application.

FIG. 13 is an exploded view of the battery pack according to the embodiment of this application shown in FIG. 12.

FIG. 14 is a schematic diagram of an electric apparatus according to an embodiment of this application.

Description of reference signs: 1. battery pack; 2. upper box body; 3. lower box body; 4. battery module; 5. battery cell; and 6. electric apparatus.

DESCRIPTION OF EMBODIMENTS

The following describes in detail some implementations and embodiments of an aluminum alloy material, an aluminum alloy structural component, a preparation method of the aluminum alloy structural component, a battery box, a battery system, an electric apparatus, and an application of this application with appropriate reference to the accompanying drawings. However, non-essential detailed descriptions may be omitted. For example, detailed descriptions of well-known matters or repetitive descriptions of substantially identical structures may be omitted. This is to avoid unnecessary verbosity of the following description, facilitating understanding by those skilled in the art. Additionally, the accompanying drawings and the following description are provided for those skilled in the art to fully understand this application and are not intended to limit the subject matter described in the claims.

The "range" disclosed in this application may be defined in the form of a lower limit and an upper limit, where a given range is defined by selecting a lower limit and an upper limit, and the selected lower and upper limits define the boundaries of a particular range. Ranges defined in this manner may include or exclude the endpoints, and any endpoint can be independently included or excluded, and can be arbitrarily combined, to be specific, any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In this application, unless otherwise specified, the numerical range "a-b" represents an abbreviated representation of any combination of real numbers between a and b, where both a and b are real numbers. For example, the numerical range "0-5" means that all real numbers between "0-5" have been listed herein, and "0-5" is merely an abbreviated representation of combinations of these numerical values. Additionally, when a parameter is described as an integer greater than or equal to 2, it is equivalent to disclosing that the parameter is, for example, an integer of 2, 3, 4, 5, 6, 7, 8, 9, 10, 11, 12, or the like. For example, when a parameter is described as an integer selected from "2-10", it is equivalent to listing the integers 2, 3, 4, 5, 6, 7, 8, 9, and 10.

In this application, terms such as "multiple", "various", "various items of", "several", and the like, unless otherwise specified, refer to a quantity greater than or equal to 2. For example, "one or more" means one or more than one. It can be understood that when referring to "any number" of items, it means a combination of any suitable number of items, to be specific, "any number" of items are combined in a manner of avoiding conflict with each other and enabling the implementation of this application.

Unless otherwise specified, all embodiments and optional embodiments of this application can be combined with each other to form new technical solutions.

References to "embodiment" herein mean that a particular feature, structure, or characteristic described in connection with the embodiment may be included in at least one embodiment or implementation of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments. References to "implementation" herein have a similar understanding.

Those skilled in the art can understand that in the methods of various implementations or embodiments, the order of writing each step does not imply a strict execution order that imposes any limitation on the implementation process. The specific execution order of each step should be determined by its function and possible inherent logic. Unless otherwise specified, all steps in this application can be performed sequentially or randomly, preferably sequentially. For example, method M includes steps (a) and (b), indicating that method M may include steps (a) and (b) performed sequentially, or steps (b) and (a) performed sequentially. For another example, method M may also include step (c), indicating that step (c) can be added to method M in any order, for example, method M may include steps (a), (b), and (c), or steps (a), (c), and (b), or steps (c), (a), and (b), and the like.

In this application, unless otherwise specified, open-ended technical features or technical solutions described with words such as "contain", "comprise", "include", and the like do not exclude additional members beyond those listed, and can be regarded as providing both closed features or solutions including the listed members as well as providing open-ended features or solutions that include additional members beyond the listed members. For example, A includes a1, a2, and a3, unless otherwise specified, may also include other members or may not include additional members, and can be regarded as providing a feature or solution of "A includes a1, a2, and a3" or "A is selected from a1, a2, and a3" as well as providing a feature or solution of "A includes not only a1, a2, and a3 but also other members".

In this application, unless otherwise specified, when "A (for example, B)" is mentioned, it indicates that B is a non-limiting example of A, and it can be understood that A is not limited to B.

In this application, unless otherwise specified, "optionally", "optional", and "option" means something is not essential, that is, being selected from either of two parallel solutions of "present" or "absent". If "optional" appears in multiple places in a technical solution, unless otherwise specified and without contradiction or mutual constraint, each "optional" is independent. Unless otherwise specified, descriptions such as "optionally include", "optionally comprise", and the like in this application, taking "optionally include" as an example, mean "may include or may not include".

In this application, unless otherwise specified, features or solutions corresponding to "and/or" include any single item among two or more related listed items, as well as any and all combinations of the related listed items, where "any and all combinations" include a combination of any two related listed items, a combination of any more related listed items, or a combination of all related listed items. For example, "A and/or B" refers to a group including A, B, and a group formed by "the combination of A and B". "Comprising A and/or B" may mean "comprising A, comprising B, and comprising A and B", or "comprising A, comprising B, or comprising A and B". This can be appropriately understood based on the context of the statement.

The terms "combination thereof", "any combination thereof", "any combination manner thereof", and the like used herein include all suitable combinations of any two or more of the listed items.

Herein, the term "suitable" in "suitable combination manner", "suitable manner", "any suitable manner", and the like needs to satisfy a condition that the technical solutions of this application can be implemented.

Herein, the terms "preferred", "better", "preferable", "preferably", "relatively better", "relatively preferred", and the like are used only to describe embodiments or examples with better effects, and it should be understood that they do not limit the protection scope of this application. If "preferred" appears in multiple places in a technical solution, unless otherwise specified and without contradiction or mutual constraint, each "preferred" is independent.

In this application, terms such as "further", "more further", "particularly", "for example", "such as", "as an example", "in an example", and the like are used for descriptive purposes, which indicate differences in content but should not be understood as limiting the protection scope of this application.

In this application, in the descriptions "first aspect", "second aspect", "third aspect", "fourth aspect", and the like, the terms "first", "second", "third", "fourth", and the like are solely for descriptive purposes and should not be understood as indicating or implying relative importance or quantity, nor as implying the importance or quantity of the indicated technical features. Moreover, "first", "second", "third", "fourth", and the like serve only as non-exhaustive enumeration purposes, and it should be understood that they do not constitute a closed limitation on quantity.

In this application, the term "room temperature" generally refers to 4°C-35°C, and may refer to 20°C±5°C. In some embodiments of this application, room temperature refers to 20°C-30°C.

In this application, for units involving data ranges, if a unit is specified only after a right endpoint, it indicates that the units of the left and right endpoints are the same. For example, 3 to 5 h and 3-5 h both indicate that the units of the left endpoint "3" and the right endpoint "5" are h (hours), which both have the same meaning as 3 h to 5 h. In addition, similar descriptions involving other parameters such as temperature and size are also understood in the same manner.

The weights of related components mentioned in the implementations or embodiments of this application may not only refer to the content of each component but also represent a proportional relationship between the weights of the components. Therefore, as long as the contents of related components in the implementations or embodiments of this application is proportionally scaled up or down, they all fall within the scope described in this application. Further, the weights involved in the implementations or embodiments of this application may be in mass units such as $\mu g$, mg, g, and kg well known in the field of chemical engineering. Unless otherwise specified, a mass ratio is numerically equal to a corresponding weight ratio. For example, if a mass of a substance A is m1 and its weight is W1, and a mass of a substance B is m2 and its weight is W2, a mass ratio m1/m2 is numerically equal to a corresponding weight ratio W1/W2.

In this application, unless otherwise specified, wt% represents a weight percentage based on weight, which is numerically equal to a corresponding mass percentage based on mass. In this application, wt% may alternatively be denoted as wt.%.

In this application, unless otherwise specified, the unit (%) of percentage involved in "mass percentage" and "mass fraction" may alternatively be denoted as wt% or %(w/w).

In this application, unless otherwise specified, "greater than and equal to" and "greater than or equal to" can both be denoted as "≥", "less than and equal to" and "less than or equal to" can both be denoted as "≤", "greater than" can be equivalently denoted as ">", and "less than" can be equivalently denoted as "<". In this application, unless otherwise specified, "greater than or equal to" and "≥" can be regarded as also providing the two solutions of "greater than" and "equal to". In this application, unless otherwise specified, "less than or equal to" and "≤" can be regarded as also providing the two solutions of "less than" and "equal to".

In this application, exemplary descriptions such as "in some implementations (or embodiments)" or "in one implementation (or embodiment)" may include, but are not limited to, the meaning that these solutions can be combined with other solutions in an appropriate manner to form new technical solutions.

For a battery box that provides protection outside a battery cell, the battery box is required to not only have good mechanical properties to reduce the degree of damage to the battery upon impact but also have a certain level of corrosion resistance to extend the service life of the battery. The corrosion resistance of current aluminum alloy materials, such as A380 aluminum alloy, needs further improvement.

According to various implementations and embodiments of this application, according to a first aspect, this application provides an aluminum alloy material. The aluminum alloy material includes a matrix element Al and a relatively low content of Cu, such as 0.5wt% to 0.9wt% of Cu, where the aluminum alloy material has good mechanical properties and excellent corrosion resistance, can be used as a main material of a battery box, and is conducive to extending the service life of the battery box.

In this application, unless otherwise specified, "the aluminum alloy material is used as a primary material for a battery box" means that the aluminum alloy material is used as a primary material for at least some structures in the battery box, where a mass proportion of the aluminum alloy material in these structures is greater than or may be greater than 80%, may further be greater than 90%, or is even close to 100% or is 100%. In this application, unless otherwise specified, when "the aluminum alloy material is used as a primary material for a structural component or product", it is permissible to add another functional component to the aluminum alloy material to further improve the material properties without compromising basic properties of the aluminum alloy material, particularly without compromising the mechanical properties and corrosion resistance. In some embodiments, the aluminum alloy material is used as a constituent material of the battery box. In this case, the chemical composition of some structures or structural components of the battery box is consistent with that of the aluminum alloy material, and a mass proportion of the aluminum alloy material in the corresponding structures or structural components is 100%.

In this application, unless otherwise specified, "content of an element" refers to a mass percentage of that element in the aluminum alloy material provided by this application. For example, "Cu content" refers to a mass percentage of Cu element in the aluminum alloy material. Unless otherwise specified, "content of an alloy phase" refers to a mass percentage of that alloy phase in the aluminum alloy material provided by this application.

In some implementations, an aluminum alloy material is provided, including silicon (Si) element, copper (Cu) element, titanium (Ti) element, magnesium (Mg) element, zinc (Zn) element, manganese (Mn) element, strontium (Sr) element, a matrix element Al, and unavoidable impurity elements, where the aluminum alloy material includes no $Al_2Cu$ phase or includes a low content of $Al_2Cu$ phase, for example, a mass fraction of the $Al_2Cu$ phase in the aluminum alloy material is less than or equal to 1.3%.

In some implementations, this application provides an aluminum alloy material. By mass percentage, the aluminum alloy material includes the following constituent elements: 6% to 11% of Si, 0.5% to 0.9% of Cu, 0.1% to 0.4% of Ti, 0.2% to 0.6% of Mg, 0.25% to 0.6% of Zn, 0.5% to 1.1% of Mn, 0.01% to 0.05% of Sr, a matrix element Al, and unavoidable impurity elements;

where the aluminum alloy material includes or does not include an $Al_2Cu$ phase, further, a mass fraction of the $Al_2Cu$ phase in the aluminum alloy material may be less than or equal to 1.3%.

In this application, unless otherwise specified, the "matrix element" refers to an element that provides a matrix phase. An ingot of the matrix element is often used as an initial material, which is added with a modifying element to form an alloy phase including multiple elements. In this application, the matrix element of the aluminum alloy material is Al.

In this application, unless otherwise specified, "unavoidable impurities" refer to impurity elements that are not intentionally introduced but are inevitably introduced during a preparation process.

In this application, methods including but not limited to the following may be used to characterize and analyze an element composition, alloy phases, alloy structure, and the like of the aluminum alloy material: X-ray diffraction (XRD) method, energy dispersive spectrometer (EDS, Energy Dispersive Spectrometer), scanning electron microscope (SEM), metallographic microscope, and the like. Operation methods and data analysis methods of these instruments are well-known to those skilled in the art. Unless otherwise specified, testing and analysis methods in the embodiment section below may be used, but are not limited thereto.

The aluminum alloy material uses aluminum (Al) as a matrix element, and includes silicon (Si) element, copper (Cu) element, titanium (Ti) element, magnesium (Mg) element, zinc (Zn) element, manganese (Mn) element, and strontium (Sr) element. By controlling the constituent elements of the aluminum alloy material within the aforementioned content range, the matrix element Al in the aluminum alloy material forms an $\alpha$-Al matrix phase, where the matrix phase is mainly distributed in a form of near-equiaxed crystals, and the Si element can form an Al-Si eutectic phase with the $\alpha$-Al matrix phase, providing good basic mechanical properties. The introduction of the Cu element may form a bone-like or needle-like $Al_2Cu$ phase, where the $Al_2Cu$ phase has a certain strengthening effect. An increase in Cu content is conducive to enhancing the mechanical strength of the material, for example, altering the morphology of an impurity phase by being combined with the impurity phase so as to reduce deterioration to the mechanical properties caused by the impurity phase. However, a high Cu content is likely to reduce the corrosion resistance of the aluminum alloy material and is also likely to reduce an elongation of the aluminum alloy material. The $Al_2Cu$ phase has a more positive potential, and a matrix phase with a high Cu content also has a more positive potential. In this case, a matrix phase with a low Cu content serves as a cathode phase to form a local electrochemical microcell with a nearby Cu-rich matrix phase and the $Al_2Cu$ phase, causing continuous corrosion of a matrix phase portion of a Cu-lack solid solution. The content of the $Al_2Cu$ phase is substantially linearly related to the Cu content, and by designing a relatively low copper content, a proportion of the $Al_2Cu$ phase can be reduced, thereby improving the corrosion resistance and elongation of the material. In addition, in the aluminum alloy material provided above, a strengthening effect can be provided by using only a small amount of Cu element, without causing any adverse effect or causing a minimal adverse effect on the corrosion resistance. The introduction of the Ti element can form a circular or near-elliptical precipitated phase, where the precipitated phase can serve as a non-spontaneous nucleation site during crystallization, achieving a certain grain refinement effect, providing a strengthening effect, and improving the elongation. The introduction of the Mg element and the Zn element can enhance the strength of the aluminum alloy material by forming a solid solution and strengthening precipitation. The Sr element is soluble in the matrix phase, where Sr can alter a solidification process during casting, playing a modification role on alloy phases of the aluminum alloy material, and modifying an Al-Si eutectic structure into a fine fibrous form, thereby enhancing the mechanical strength. The Mn element can contribute to a strengthening effect of the Mg element and make precipitated phases uniformly distributed. In addition, the introduction of the Mn element facilitates a demold release process during casting and can be combined with impurity elements to reduce the deterioration to the corrosion resistance of the aluminum alloy material caused by the impurity elements. By designing element composition and element content in the aluminum alloy material, the prepared aluminum alloy material can have a special microstructure, where multiple synergistic effects among the elements can effectively improve the corrosion resistance of the aluminum alloy material as well as enable the aluminum alloy material to have good mechanical properties, with improvements in both mechanical strength and ductility. By reasonably setting the contents of the Cu element, the Mg element, the Zn element, and other elements, a foundation can be laid for the aluminum alloy material to have good mechanical properties such as good tensile strength and hardness. Further, by controlling the contents of the Cu element, the Ti element, and the Sr element in the aluminum alloy material, the corrosion resistance of the aluminum alloy material can be significantly improved.

In some implementations, a mass percentage of the Cu element in the aluminum alloy material may be 0.5% to 0.9%, optionally 0.5% to 0.8%, and further optionally 0.6% to 0.8%. The mass percentage of the Cu element in the aluminum alloy material may alternatively be any one of the following percentages or selected from a range defined by any two of the following percentages: 0.5%, 0.55%, 0.6%, 0.65%, 0.7%, 0.75%, 0.8%, 0.85%, 0.9%, and the like.

In some implementations, the aluminum alloy material may include or may not include an $Al_2Cu$ phase. Without limitation, a mass fraction of the $Al_2Cu$ phase in the aluminum alloy material may be less than or equal to 1.3%, optionally 0.1% to 1.3%, and further optionally 0.8% to 1.3%. The mass fraction of the $Al_2Cu$ phase in the aluminum alloy material may alternatively be any one of the following percentages or selected from a range defined by any two of the following percentages: 0%, 0.1%, 0.2%, 0.3%, 0.4%, 0.5%, 0.6%, 0.65%, 0.7%, 0.75%, 0.8%, 0.85%, 0.87%, 0.9%, 1.0%, 1.1%, 1.2%, 1.29%, and the like. The mass fraction of the $Al_2Cu$ phase in the aluminum alloy material may alternatively be selected from any suitable one of the following ranges: 0.4% to 1.3%, 0.4% to 1.0%, 0.5% to 1.3%, 0.5% to 1.0%, 0.6% to 1.3%, 0.6% to 1.0%, 0.8% to 1.0%, 0.8% to 1.29%, 0.85% to 1.3%, 0.85% to 1.29%, and the like.

Based on any suitable implementation of this application, further, in some embodiments, the aluminum alloy material satisfies one or two of the following characteristics (any numerical parameter in the following characteristics may alternatively be selected from any suitable value or range in the context):

a mass percentage of the Cu element in the aluminum alloy material is 0.5% to 0.9%, optionally 0.5% to 0.8%, and further optionally 0.6% to 0.8% (may alternatively be selected from any suitable content or range in the context); and the aluminum alloy material includes or does not include an $Al_2Cu$ phase, optionally, a mass fraction of the $Al_2Cu$ phase in the aluminum alloy material is less than or equal to 1.3%; and further optionally, the aluminum alloy material

includes an $Al_2Cu$ phase, where a mass fraction of the $Al_2Cu$ phase in the aluminum alloy material is 0.1% to 1.3%, further optionally 0.8% to 1.3% (may alternatively be selected from any suitable content or range in the context).

By adjusting the mass percentage of the Cu element in the aluminum alloy material, the content of the $Al_2Cu$ phase can be controlled. Controlling the content of the $Al_2Cu$ phase within the aforementioned range is more conducive to allowing the aluminum alloy material to achieve good mechanical properties and excellent corrosion resistance, is more conducive to achieving excellent corrosion resistance, and also enables the aluminum alloy material to have good mechanical strength and ductility.

Based on any suitable implementation of this application, further, in some implementations, the aluminum alloy material includes a fibrous Al-Si eutectic structure.

Based on any suitable implementation of this application, further, in some implementations, the aluminum alloy material includes an $Al_3Ti$ strengthening phase.

Based on any suitable implementation of this application, further, in some implementations, the aluminum alloy material includes a fibrous Al-Si eutectic structure, and the aluminum alloy material includes an $Al_3Ti$ strengthening phase.

In the aluminum alloy material, the $\alpha$-Al matrix phase and the Si phase form an Al-Si eutectic phase, where the eutectic phase is mainly distributed as a fine fibrous structure between $\alpha$-Al grains, which is conducive to enhancing the mechanical strength of the matrix phase. The Ti element can form a circular or near-elliptical $Al_3Ti$ precipitated phase, where the precipitated phase can serve as a non-spontaneous nucleation site during crystallization, providing a certain grain refinement effect and providing a strengthening effect. In addition, improvements in second phase structure distribution and fine grain strengthening are both conducive to improving ductility.

In some implementations, a mass percentage of the Si element in the aluminum alloy material is 6% to 11%, optionally 6.5% to 11%, and further optionally 8% to 11%. The mass percentage of the Si element in the aluminum alloy material may alternatively be any one of the following percentages or selected from a range defined by any two of the following percentages: 6%, 6.5%, 7%, 7.5%, 8%, 8.5%, 9%, 9.5%, 10%, 10.5%, 11%, and the like. The mass percentage of Si element in the aluminum alloy material may alternatively be selected from any suitable one of the following ranges: 6.5% to 10.5%, 8.5% to 10.5%, and the like.

Regarding the content of the Si element, a eutectic point of an Al-Si alloy is 12.5wt%, and exceeding the eutectic point leads to formation of primary silicon first, which is detrimental to the corrosion resistance. The morphology of the Al-Si eutectic structure can be adjusted by adjusting the content of the Si element.

In some implementations, a mass percentage of the Ti element in the aluminum alloy material is 0.1% to 0.4%, optionally 0.2% to 0.4%, and further optionally 0.25% to 0.4%. The mass percentage of the Ti element in the aluminum alloy material may alternatively be any one of the following percentages or selected from a range defined by any two of the following percentages: 0.1%, 0.15%, 0.2%, 0.25%, 0.3%, 0.35%, 0.4%, and the like. The mass percentage of the Ti element in the aluminum alloy material may alternatively be selected from any suitable one of the following ranges: 0.25% to 0.35%, 0.2% to 0.3%, 0.1% to 0.3%, 0.3% to 0.4%, and the like.

In some implementations, a mass fraction of the $Al_3Ti$ strengthening phase in the aluminum alloy material may be 0.3% to 2%, optionally 0.3% to 1%, and further optionally 0.35% to 0.6%. The mass fraction of the $Al_3Ti$ strengthening phase in the aluminum alloy material may alternatively be any one of the following percentages or selected from a range defined by any two of the following percentages: 0.3%, 0.35%, 0.4%, 0.45%, 0.46%, 0.48%, 0.49%, 0.5%, 0.51%, 0.52%, 0.54%, 0.55%, 0.56%, 0.58%, 0.6%, 0.62%, 0.64%, 0.65%, 0.66%, 0.68%, 0.7%, 0.8%, 0.9%, 1.0%, 1.2%, 1.5%, 1.6%, 1.8%, 2.0%, and the like. The mass fraction of the $Al_3Ti$ strengthening phase in the aluminum alloy material may alternatively be selected from any suitable one of the following ranges: 0.5% to 2%, approximately 0.5%, and the like. The "approximately" herein indicates a reasonable fluctuation range. For example, approximately 0.5% may be $\pm0.05\%$, $\pm0.06\%$, $\pm0.08\%$, $\pm0.01\%$, $\pm0.15\%$, or the like. The Al content can be adjusted to produce the $Al_3Ti$ strengthening phase, and the mass fraction of the $Al_3Ti$ strengthening phase is controlled within a small range, for example, the mass fraction of the $Al_3Ti$ strengthening phase in the aluminum alloy material can be controlled to be approximately 0.5%. A reduction in precipitated phases is conducive to improving the ductility.

Based on any suitable implementation of this application, further, in some implementations, the aluminum alloy material satisfies one, two, or three of the following characteristics (any numerical parameter in the following characteristics may alternatively be selected from any suitable value or range in the context):

the mass percentage of the Si element in the aluminum alloy material is 6% to 11%, optionally 6.5% to 11%, and further optionally 8% to 11% (may alternatively be selected from any suitable content or range in the context);

the mass percentage of the Ti element in the aluminum alloy material is 0.1% to 0.4%, optionally 0.2% to 0.4%, and further optionally 0.25% to 0.4% (may alternatively be selected from any suitable content or range in the context); and

the mass fraction of the $Al_3Ti$ strengthening phase in the aluminum alloy material is 0.3% to 2%, optionally 0.3% to 1%, and further optionally 0.35% to 0.6% (may alternatively be selected from any suitable content or range in the context).

By adjusting the content of the Ti element, the content of the $Al_3Ti$ strengthening phase can be controlled. By adjusting one or more of these content parameters, the mechanical properties of the aluminum alloy material can be adjusted. The content parameters being within the aforementioned ranges is conducive to providing good mechanical strength while reducing the Cu content.

Based on any suitable implementation of this application, further, in some implementations, the aluminum alloy material may include or may not include an $Mg_2Si$ phase. Without limitation, a mass fraction of the $Mg_2Si$ phase in the aluminum alloy material may be less than or equal to 0.05%, optionally 0% (that is, absent). The mass fraction of the $Mg_2Si$ phase in the aluminum alloy material may alternatively be any one of the following percentages, or less than or equal to any one of the following percentages, or selected from a range defined by any two of the following percentages, or selected from a range formed by any one of the following percentages and 0%: 0.005%, 0.006%, 0.008%, 0.01%, 0.02%, 0.03%, 0.04%, 0.05%, and the like.

The introduction of the Mg element may also produce an $Al_5Cu_2Mg_8Si_{16}$ phase, which can provide a high-temperature strengthening effect. The $Mg_2Si$ phase can also provide a strengthening effect on the aluminum alloy, but the $Mg_2Si$ phase is a strong cathode phase, which tends to accelerate matrix corrosion, causing deterioration to the corrosion resistance of the aluminum alloy material. In the aluminum alloy material system provided by this application, the $Mg_2Si$ phase typically begins to precipitate when the Mg content exceeds approximately 1.2wt%. By controlling the Mg content, precipitation behavior of the $Mg_2Si$ phase can be controlled, allowing the $Mg_2Si$ phase formed in an intermediate process to be dissolved, resulting in no or very little $Mg_2Si$ phase in the final aluminum alloy material, which is conducive to reducing adverse effects on the corrosion resistance while leveraging the strengthening effect of the Mg element.

In some implementations, a mass percentage of the Mg element in the aluminum alloy material is 0.2% to 0.6%, optionally 0.3% to 0.6%, and further optionally 0.3% to 0.5%. The mass percentage of the Mg element in the aluminum alloy material may alternatively be any one of the following percentages or selected from a range defined by any two of the following percentages: 0.2%, 0.25%, 0.3%, 0.35%, 0.4%, 0.45%, 0.5%, 0.55%, 0.6%, and the like. The mass percentage of the Mg element in the aluminum alloy material may alternatively be selected from any suitable one of the following ranges: 0.35% to 0.5%, 0.3% to 0.45%, 0.35% to 0.45%, 0.4% to 0.5%, 0.4% to 0.6%, 0.3% to 0.4%, and the like.

In some implementations, a mass percentage of the Zn element in the aluminum alloy material is 0.25% to 0.6%, optionally 0.3% to 0.6%, and further optionally 0.4% to 0.6%. The mass percentage of the Zn element in the aluminum alloy material may alternatively be any one of the following percentages or selected from a range defined by any two of the following percentages: 0.2%, 0.25%, 0.3%, 0.35%, 0.4%, 0.45%, 0.5%, 0.55%, 0.6%, and the like. The mass percentage of the Zn element in the aluminum alloy material may alternatively be selected from any suitable one of the following ranges: 0.45% to 0.6%, 0.4% to 0.55%, 0.3% to 0.5%, 0.4% to 0.5%, and the like.

In some implementations, a mass ratio of the Mg element to the Zn element in the aluminum alloy material is 1:(1.1 to 1.3), optionally 1:(1.1 to 1.25). The mass ratio of the Mg element to the Zn element in the aluminum alloy material may alternatively be any one of the following ratios or selected from a range defined by any two of the following ratios: 1:1.1, 1:1.15, 1:1.2, 1:1.25, 1:1.3, and the like. The mass ratio of the Mg element to the Zn element in the aluminum alloy material may alternatively be selected from any suitable one of the following ranges: 1:(1.1 to 1.2) and the like.

Based on any suitable implementation of this application, further, in some implementations, the aluminum alloy material satisfies one, two, or three of the following characteristics (any numerical parameter in the following characteristics may alternatively be selected from any suitable value or range in the context):

the mass percentage of the Mg element in the aluminum alloy material is 0.2% to 0.6%, optionally 0.3% to 0.6%, and further optionally 0.3% to 0.5% (may alternatively be selected from any suitable content or range in the context);
the mass percentage of the Zn element in the aluminum alloy material is 0.25% to 0.6%, optionally 0.3% to 0.6%, and further optionally 0.4% to 0.6% (may alternatively be selected from any suitable content or range in the context); and
the mass ratio of the Mg element to the Zn element in the aluminum alloy material is 1:(1.1 to 1.3), optionally 1:(1.1 to 1.25) (may alternatively be selected from any suitable content or range in the context).

By adjusting the Zn content, a solid solution strengthening and precipitation strengthening effect of the Zn element on the aluminum alloy material can be controlled.

Controlling the mass ratio of the Mg element to the Zn element within the aforementioned range is conducive to providing a synergistic strengthening effect.

Controlling at least one of the Mg content and the Zn content within the aforementioned ranges is more conducive to allowing the aluminum alloy material to achieve good mechanical properties and excellent corrosion resistance.

Based on any suitable implementation of this application, further, in some implementations, the unavoidable impurity elements include Fe element.

In some implementations, a mass percentage of the Mn element in the aluminum alloy material is 0.5% to 1.1%, optionally 0.7% to 1.1%, and further optionally 0.8% to 1.1%. The mass percentage of the Mn element in the aluminum alloy material may alternatively be any one of the following percentages or selected from a range defined by any two of the following percentages: 0.5%, 0.6%, 0.7%, 0.8%, 0.9%, 1.0%, 1.1%, and the like. The mass percentage of the Mn element in the aluminum alloy material may alternatively be selected from any suitable one of the following ranges: 0.6% to 1.0%, 0.8% to 1.0%, and the like.

In some implementations, a mass fraction of the AlSiMnFe phase in the aluminum alloy material (may be denoted as $f_{AlSiMnFe}$) is less than or equal to 0.2%, optionally less than or equal to 0.1%. In some implementations, the aluminum alloy material includes an AlSiMnFe phase. A mass fraction of the AlSiMnFe phase in the aluminum alloy material may be any one of the following percentages, or selected from a range defined by any two of the following percentages, or less than or equal to any one of the following percentages, or greater than 0% and less than or equal to any one of the following percentages, or greater than or equal to 0% and less than or equal to any one of the following percentages: 0.01%, 0.02%, 0.04%, 0.05%, 0.06%, 0.08%, 0.09%, 0.1%, 0.12%, 0.15%, 0.16%, 0.18%, 0.2%, and the like. For example, the mass fraction of the AlSiMnFe phase in the aluminum alloy material may be selected from any suitable one of the following ranges: $0 < f_{AlSiMnFe} \leq 0.2\%$, $0 < f_{AlSiMnFe} \leq 0.1\%$, and the like.

Based on any suitable implementation of this application, further, in some implementations, the aluminum alloy material satisfies one or two of the following characteristics (any numerical parameter in the following characteristics may alternatively be selected from any suitable value or range in the context):

the mass percentage of the Mn element in the aluminum alloy material is 0.5% to 1.1%, optionally 0.7% to 1.1%, and further optionally 0.8% to 1.1% (may alternatively be selected from any suitable content or range in the context); and the aluminum alloy material includes or does not include an AlSiMnFe phase, where a mass fraction of the AlSiMnFe phase in the aluminum alloy material is less than or equal to 0.2%, optionally less than or equal to 0.1% (may alternatively be selected from any suitable content or range in the context).

During casting of the aluminum alloy, an Fe impurity is often unavoidably present in the formed aluminum alloy, where the Fe impurity can form a needle-like AlSiMnFe phase.

The addition of the Mn element can provide a strength enhancing effect. The Mn element mainly enhances the strength of the matrix Al by being dissolved in the matrix Al as a solid solution through lattice distortion, and the produced AlSiMnFe phase also has a certain strengthening effect.

Due to a large contact area and a large potential difference between the AlSiMnFe phase and the α-Al matrix, local galvanic corrosion may occur.

A small amount of Fe element (for example, the Fe content is less than or equal to 0.7wt%) facilitates demold release during the casting process, but a high Fe content tends to reduce the corrosion resistance of the aluminum alloy material. Controlling the Fe content within a low content range is conducive to reducing adverse effects of Fe on the corrosion resistance.

In addition, the introduction of the Cu element can transform a portion of the needle-like AlSiMnFe phase into dendritic AlSiMnFeCu, which is also conducive to reducing deterioration to the corrosion resistance caused by the needle-like AlSiMnFe phase.

By adjusting the content of the Mn element, a content of the needle-like AlSiMnFe phase can be controlled. By controlling the content of the AlSiMnFe phase, a comprehensive performance of corrosion resistance and mechanical properties of the aluminum alloy material can be improved.

Based on any suitable implementation of this application, further, in some implementations, a mass percentage of the Sr element in the aluminum alloy material is 0.01% to 0.05%, optionally 200 ppm to 500 ppm, where 1 ppm represents one part per million. 1 ppm = 0.0001%, and 200 ppm = 0.02%. The mass percentage of the Sr element in the aluminum alloy material may alternatively be any one of the following values or selected from a range defined by any two of the following values: 100 ppm, 150 ppm, 200 ppm, 250 ppm, 300 ppm, 350 ppm, 400 ppm, 450 ppm, 500 ppm, and the like. The mass percentage of the Sr element in the aluminum alloy material may alternatively be selected from any suitable one of the following ranges: 300 ppm to 500 ppm, and the like.

By adjusting the content of the Sr element, a modification effect of the Sr element on alloy phases can be adjusted. Controlling the Sr content within a more suitable range is more conducive to optimizing the mechanical properties of the aluminum alloy material.

Based on any suitable implementation of this application, further, in some implementations, by mass percentage, the aluminum alloy material includes the following constituent elements: 6% to 11% of Si, 0.5% to 0.9% of Cu, 0.1% to 0.4% of Ti, 0.3% to 0.6% of Mg, 0.3% to 0.6% of Zn, 0.5% to 1.1% of Mn, 0.01% to 0.05% of Sr, unavoidable impurity elements, and the balance of a matrix element Al.

Based on any suitable implementation of this application, further, in some implementations, by mass percentage, the aluminum alloy material includes the following constituent elements: 6.5% to 11% of Si, 0.5% to 0.8% of Cu, 0.2% to 0.4% of Ti, 0.3% to 0.6% of Mg, 0.3% to 0.6% of Zn, 0.7% to 1.1% of Mn, 0.02% to 0.05% of Sr, unavoidable impurity elements, and the balance of a matrix element Al.

Based on any suitable implementation of this application, further, in some implementations, by mass percentage, the aluminum alloy material includes the following constituent elements: 8% to 11% of Si, 0.6% to 0.8% of Cu, 0.25% to 0.4% of Ti, 0.3% to 0.5% of Mg, 0.4% to 0.6% of Zn, 0.8% to 1.1% of Mn, 0.03% to 0.05% of Sr, unavoidable impurity elements, and the balance of a matrix element Al.

Adjusting the types and contents of the elements in the aluminum alloy material is more conducive to allowing the aluminum alloy material to achieve good mechanical properties and excellent corrosion resistance.

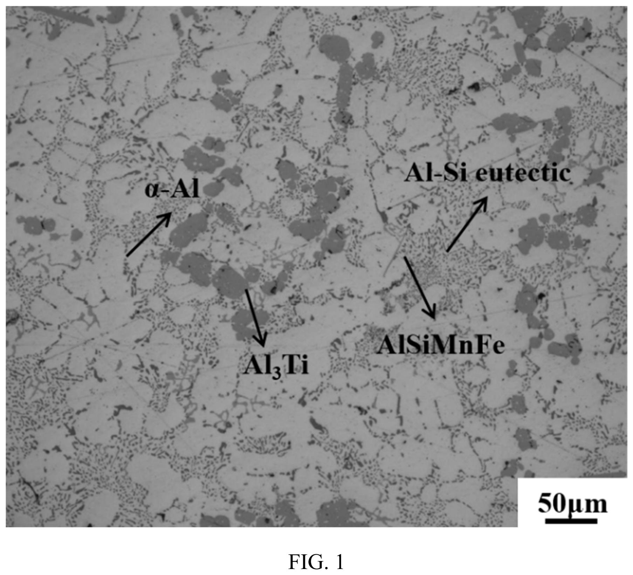

In some implementations, reasonably designing the element composition and element content allows the aluminum alloy material to have a microstructure as shown in FIG. 1: near-equiaxed $\alpha$-Al crystals and a fine fibrous eutectic structure, as well as a small amount of alloy phases such as $Al_3Ti$ and AlSiMnFe.

According to another aspect of this application, a preparation method of an aluminum alloy material is provided, for preparing the aluminum alloy material according to the first aspect of this application.

In some implementations, a preparation method of an aluminum alloy material is provided, including the following steps.

S100 (Smelting): Heat and melt an aluminum ingot, add ingredients determined according to a nominal composition of the aluminum alloy material in the form of intermediate alloys, and perform melting and slag removal to prepare a refined melt.

S200 (Molding): Perform cast molding on the refined melt to prepare an ingot.

S300 (Heat treatment): Perform heat treatment and cooling on the ingot to obtain the aluminum alloy material.

In this application, unless otherwise specified, "nominal composition" refers to a theoretical value or designed value of a target composition.

In step S100, the refined melt is prepared through smelting. The prepared refined melt is also referred to as a refined aluminum alloy melt.

In this application, "smelting" has a well-known meaning in the art, and refers to the operation of heating, melting, and tempering a solid metal, which is one of the processes for casting alloys. Typically, the smelting process requires the use of a smelting furnace, where other components for preparing the alloy are molten in the smelting furnace, and after operations such as slag removal and refining, the materials are molten to form a required alloy. The other components for preparing the alloy may include a metal ingot for providing a matrix element, and a necessary alloy component. In this application, before cast molding, smelting is performed to obtain a refined melt containing the components required for the aluminum alloy material. Under a condition that the nominal composition of the aluminum alloy material is determined, those skilled in the art can reasonably determine an implementation manner of the smelting.

Each alloy element can be added in the form of an intermediate alloy, but is not limited thereto. Under the condition that the nominal composition of the aluminum alloy material is determined, those skilled in the art can select an appropriate addition temperature and addition time based on the characteristics of each alloy element (for example, melting point), ensuring that the materials remain in a molten state throughout the process from heating and melting the aluminum ingot to obtaining the refined melt.

For the addition of some elements, a burning loss rate may need to be considered. For example, in some implementations, taking 1 kilogram (kg) as an example, a burning loss rate of Zn is 12%, and a burning loss rate of Mg is 15%, by mass percentage.

In some implementations, Mg and Zn are added in a pure metal form. Since Mg and Zn in a pure metal form are prone to burning loss, they can be added under an appropriate cooling condition after high-melting-point elements Si, Mn, and Cu are all molten.

In some implementations, ingredients corresponding to the elements are added in the following forms: $AlSi_{20}$, $AlCu_{50}$, $AlTi_5$, Zn, Mg, $AlMn_{10}$, $AlSr_{10}$, and Al. The numbers indicate an atomic number ratio between the elements, and different numbers correspond to different alloy designations. Those skilled in the art understand the meaning of the corresponding designations.

In this application, unless otherwise specified, "melting" means that the materials are smelted in a molten state, so that the elements in the materials are diffused into each other and mixed thoroughly to form a uniform liquid melt.

Without limitation, melting includes refining.

In this application, "refining" has a well-known meaning in the art, and refers to a step of obtaining a high-purity alloy by removing impurities and impure substances. Suitable refining methods can be selected based on the compositional characteristics of the aluminum alloy material. Without limitation, refining can be achieved by adding a refining agent. A refining agent used in this application may include common refining agents for casting aluminum alloys, such as high-efficiency refining agents (non-toxic refining agents), and degassing refining agents.

In this application, "slag removal" has a well-known meaning in the art, and refers to a step of removing slag from the melt during the smelting process. During the melting process, floating slag may appear on the surface of the melt, and the floating slag can be removed through slag removal. Slag removal may be performed once or multiple times.

In step S200, the refined melt obtained after smelting is subjected to cast molding to prepare an ingot. The prepared ingot is also referred to as an aluminum alloy ingot.

The ingot prepared through cast molding has a specific shape and size. The ingot may have a preset shape and size. The preset shape and preset size may be determined based on a sample tested in a test or based on actual needs. The shape and size of the ingot may be controlled based on the shape and size of a mold used during casting.

In step S300, the ingot obtained through cast molding is thermally treated to obtain a target aluminum alloy material.

Heat treatment can be achieved by maintaining the ingot at a specific temperature, and the heat treatment can be ended by cooling.

In the heat treatment step of the ingot, heat treatment may be performed in a manner of maintaining the temperature, and an appropriate maintained temperature (also referred to as an annealing temperature) and temperature maintaining time can be selected based on the size of the ingot, so as to achieve a good annealing effect. Typically, the maintained temperature for annealing may be slightly lower than a melting point, such as 70%-80% of the melting point, as a non-limiting example. A larger ingot usually requires a longer temperature maintaining time for heat treatment, and a longer temperature maintaining time helps to improve the annealing effect. The temperature maintaining time can be controlled within a certain duration range to achieve a good annealing effect while minimizing overburning and grain coarsening. Frequent slag removal during the temperature maintaining process is conducive to obtaining a well-formed ingot. An appropriate temperature maintaining time can be selected based on the size of the ingot. Generally, the temperature maintaining time for heat treatment is at least 0.5 h and may be any of the following durations or selected from a range defined by any two of the following durations: 1 h, 2 h, 3 h, 5 h, 6 h, 8 h, 10 h, 15 h, 20 h, 25 h, 30 h, 35 h, 40 h, 45 h, 48 h, 50 h, and the like. For example, the temperature maintaining time for heat treatment may be 36 h-50 h, may further be 36 h-48 h, and may still further be 36 h-45 h. Taking an ingot with dimensions of 20 mm × 35 mm × 10 mm as an example, an annealing time may be 1.5 h-3 h, such as 1.5 h, 2 h, 2.5 h, or 3 h.

Those skilled in the art can select appropriate process parameters to effectively reduce or eliminate intragranular segregation of elements in the aluminum alloy, achieving homogenization and improving the comprehensive performance of the mechanical properties and corrosion resistance of the aluminum alloy material.

In some implementations, the step of performing heat treatment and cooling on the ingot includes maintaining the temperature of the ingot and cooling the ingot.

In some implementations, in the step of maintaining the temperature of the ingot and cooling the ingot, the maintained temperature may be 500°C to 600°C. The temperature maintaining time may be determined with reference to the aforementioned method. In some implementations, the temperature maintaining time may be 1 h to 3 h, and may further be 1.5 h to 2.5 h or 1.5 h to 2 h, for example, 1 h, 1.5 h, 2 h, 2.5 h, or the like. In some other implementations, the temperature maintaining time may be 36 h to 50 h, may further be 36 h to 48 h, and may still further be 36 h to 45 h, for example, 36 h, 40 h, 45 h, 48 h, or the like.

In some implementations, in the step of performing heat treatment and cooling on the ingot, the ingot is cooled to 20°C-30°C.

Without limitation, a cooling medium may be inert gas or oil, and air cooling, or furnace cooling may alternatively be used.

In some implementations, a preparation method of an aluminum alloy material is provided.

In some implementations, a preparation method of an aluminum alloy material is provided, including the following steps.

S100: Heat and melt an aluminum ingot, add required amounts of Mn element, Si element, Cu element, Mg element, Zn element, Ti element, and Sr element according to a nominal composition of the aluminum alloy material, and perform melting and slag removal to prepare a refined melt, where each element may be added in any one of a pure metal form or an intermediate alloy form.

S200: Perform cast molding on the refined melt to prepare an ingot.

S300: Maintain a temperature of the ingot and cool the ingot to obtain an aluminum alloy material.

In some implementations, the Mn element, the Si element, the Cu element, the Ti element, and the Sr element are added as ingredients in the form of an intermediate alloy, and the Mg element and the Zn element are added as ingredients in the form of a pure metal.

In some implementations, step S100 includes step S110 and step S120.

In some implementations, step S110 includes: heat and melt an aluminum ingot, add ingredients including the Mn element, the Si element, the Cu element, the Mg element, and the Zn element to a melt of the aluminum ingot for smelting to prepare a fourth melt.

In some implementations, step S120 includes: perform slag removal on the fourth melt, add a refining agent, and add ingredients including the Ti element and the Sr element for refining to prepare a refined melt.

It should be noted that slag removal in step S120 may be performed simultaneously with step S110.

The addition of the Mn element facilitates demold release and therefore the Mn element may be added earlier. The Si content is relatively high and may be added relatively earlier. An addition order of the Mn element and the Si element may not be particularly limited. The Cu element may be added after the addition of the Mn element and the Si element, or the Mn element, the Cu element, and the Si element may be added sequentially. The Mg element and the Zn element may be added in the form of a pure metal. Since the Mg element and the Zn element are prone to burning loss, when added in a pure metal form, the Mg element and the Zn element may be added under an appropriate cooling condition after the higher-melting-point Si element, Mn element, and Cu element are added. The Ti element and the Sr element may be added last, and the Sr element may be added after the addition of the Ti element. By adding an intermediate alloy including the Ti element (for example, AlTi$_5$), an Al$_3$Ti phase can be formed, where the Al$_3$Ti alloy phase can inhibit grain growth, providing a grain refinement effect. Adding the Sr element last is more conducive to exerting a modification effect of the Sr element on alloy phases.

In some implementations, ingredients including the following elements are sequentially added to the melt of the aluminum ingot in the following manner: the Mn element and the Si element are added, then the Cu element is added, then the Mg element and the Zn element are added, then the Ti element is added, and then the Sr element is added.

In some implementations, ingredients including the following elements are sequentially added to the melt of the aluminum ingot in the following manner: the Mn element is added; then the Cu element is added; then the Si element, a portion of the Ti element, the Zn element, and a portion of the Sr element are added; then the Mg element is added; and then the remaining Ti element and the remaining Sr element are added. Further, the remaining Ti element is added first, followed by the remaining Sr element.

In this application, an ingredient including X element may be referred to as "X ingredient". For example, an ingredient including the Mn element may be referred to as Mn ingredient.

In some implementations, in the step of heating and melting the aluminum ingot, a heating temperature may be 730°C to 750°C. Non-restrictive examples of the heating temperature include 730°C, 740°C, 750°C, and the like.

In some implementations, a preparation method of an aluminum alloy material is provided, including the following steps.

S112: Heat an aluminum ingot to 730°C to 750°C, maintain the ingot at that temperature, add an ingredient including the Mn element under a temperature maintaining condition for smelting to prepare a first melt, and add an ingredient including the Cu element to the first melt for smelting to prepare a second melt.

S114: Cool the second melt to 700°C to 720°C, maintain the temperature, add an ingredient including the Si element, an ingredient partially including the Ti element, an ingredient including the Zn element, and an ingredient partially including the Sr element into the second melt under a temperature maintaining condition to obtain a third melt, and add an ingredient including the Mg element at 718°C to 722°C for smelting to prepare a fourth melt.

S116: Perform slag removal on the fourth melt, add a refining agent, and add an ingredient including the remaining Ti element (also referred to as the remaining Ti ingredient) and an ingredient including the remaining Sr element (also referred to as the remaining Sr ingredient) for refining to prepare a refined melt.

S200: Perform cast molding on the refined melt to prepare an ingot.

S300: Maintain the ingot at a specific temperature (for example, 500°C to 600°C) for an appropriate time (select an appropriate temperature maintaining time based on the size of the ingot, for example, maintain the temperature for 45 h to 50 h, 1 h to 2 h, 1.5 h to 2.5 h, or the like.), and cool the ingot (for example, cool the ingot to 20°C to 30°C) to prepare an aluminum alloy material.

In some implementations, a preparation method of an aluminum alloy material is provided, including the following steps.

S112: Heat an aluminum ingot to 730°C to 750°C, maintain the temperature, add an intermediate alloy including the Mn element under a temperature maintaining condition for smelting to prepare a first melt, and add an intermediate alloy including the Cu element to the first melt for smelting to prepare a second melt.

S114: Cool the second melt to 700°C to 720°C, maintain the temperature, add an intermediate alloy including the Si element, an intermediate alloy partially including the Ti element, and an intermediate alloy partially including the Sr element to the second melt under a temperature maintaining condition for smelting, add a pure Zn metal for smelting to prepare a third melt, and add a pure Mg metal to the third melt at 718°C to 722°C for smelting to prepare a fourth melt.

S130: Perform slag removal on the fourth melt, add a refining agent, add an intermediate alloy including the remaining Ti element and an intermediate alloy including the remaining Sr element for refining to prepare a refined melt.

S200: Perform cast molding on the refined melt to prepare an ingot.

S300: Maintain the ingot at a specific temperature (for example, 500°C to 600°C) for an appropriate time (select an appropriate temperature maintaining time based on the size of the ingot, for example, maintain the temperature for 45°C to 50 h, 1 h to 2 h, 1.5 h to 2.5 h, or the like.), and cool the ingot (for example, cool the ingot to 20°C to 30°C) to prepare an aluminum alloy material.

In some implementations, step S100 includes the aforementioned step S112, step S114, and step S116.

According to a second aspect of this application, an aluminum alloy structural component is provided, which is a formed body of the aluminum alloy material according to the first aspect.

In this application, unless otherwise specified, "formed body of the aluminum alloy material" refers to a solid made from the aluminum alloy material and having a specific shape and size. The shape and size may be defined by a mold during the preparation of the aluminum alloy material, enabling the prepared aluminum alloy material to become solid with a specific shape and size.

The aluminum alloy structural component, as a formed body of the aluminum alloy material according to the first aspect, can have good mechanical properties and excellent corrosion resistance, can be used as an aluminum alloy structural component in a battery box, and can effectively extend the service life of the battery box.

According to a third aspect of this application, a preparation method of an aluminum alloy structural component is provided, and preparation can be performed by using the preparation method of the aluminum alloy material described above.

In some implementations, a preparation method of an aluminum alloy structural component is provided, including the following steps.

S100 (Smelting): Heat and melt an aluminum ingot, add ingredients determined according to a nominal composition of the aluminum alloy material in the form of intermediate alloys, and perform melting and slag removal to prepare a refined aluminum alloy melt.

S200 (Molding): Perform cast molding on the refined aluminum alloy melt to prepare an aluminum alloy ingot.

S300 (Heat treatment): Perform heat treatment and cooling on the aluminum alloy ingot to obtain an aluminum alloy structural component.

In step S100, the aluminum alloy material may be the aluminum alloy material according to the first aspect.

The aluminum alloy ingot prepared in step S200 has a specific shape and size, and the aluminum alloy material prepared after the heat treatment and cooling in step S300 also has a specific shape and size, so that an aluminum alloy structural component can be obtained while an aluminum alloy material is obtained.

The implementations of steps S100, S200, and S300 may also refer to the preparation method of the aluminum alloy material described above and refer to the implementations and embodiments below.

The aluminum alloy structural component can be prepared by using an aluminum ingot to provide a matrix element, supplemented by corresponding alloy elements through melting, slag removal, cast molding, heat treatment, and cooling. The shape and size of the aluminum alloy structural component can be controlled by selecting a mold of a corresponding shape and size during the cast molding step. It can be understood that the shape and size of the cooled structural component can also be adjusted to obtain an aluminum alloy structural component of a target shape and size, for example, using methods including but not limited to sandblasting and polishing.

According to a fourth aspect of this application, a battery box is provided, where the battery box satisfies at least one of the following characteristics:

at least part of structural components in the battery box include the aluminum alloy material according to the first aspect;
the battery box includes the aluminum alloy structural component according to the second aspect; and
the battery box includes an aluminum alloy structural component prepared by the preparation method of an aluminum alloy structural component according to the third aspect.

The battery box can provide protection for an internal battery cell. On one hand, the battery box needs to have good mechanical strength to reduce the degree of damage to the battery upon impact. On the other hand, the battery box is susceptible to damage caused by galvanic corrosion during storage and battery cycling. Therefore, the battery box needs to have a certain level of corrosion resistance. A battery box made of the aforementioned aluminum alloy material or aluminum alloy structural component can meet both the requirements for mechanical properties and corrosion resistance of the battery box.

Without limitation, a part of the battery box including the aforementioned aluminum alloy material may include one or more of a bottom plate, a panel, and a bracket, but is not limited to these parts. The part of the battery box including the aforementioned aluminum alloy material may be integrally formed or may be fixedly connected in an appropriate manner such as seamless welding, to better match the required shape and size.

Based on any suitable implementation of this application, further, in some embodiments, the battery box includes a lithium battery box.

The aforementioned aluminum alloy material is applicable to lithium battery boxes, but is not limited thereto.

According to a fifth aspect of this application, a battery system is provided, including the battery box according to the fourth aspect and a battery cell located inside the battery box described.

Based on any suitable implementation of this application, further, in some embodiments, the battery cell includes a liquid electrolyte.

According to a sixth aspect of this application, an electric apparatus is provided, including at least one of the aluminum alloy material according to the first aspect, the aluminum alloy structural component according to the second aspect, an aluminum alloy structural component prepared by the preparation method of an aluminum alloy structural component according to the third aspect, the battery box according to the fourth aspect, and the battery system according to the fifth aspect.

According to a seventh aspect of this application, an application of the aluminum alloy material according to the first aspect in preparation of at least one of an aluminum alloy structural component, a battery box, a battery system, and an electric apparatus is provided.

Using the aforementioned aluminum alloy material, the aforementioned aluminum alloy structural component, or a battery box including the aforementioned aluminum alloy material or aluminum alloy structural component in one or more of the battery system and the electric apparatus helps to improve the reliability and service life of the battery system and electric apparatus, not only reducing the degree of damage to the battery upon impact but also improving the corrosion resistance of the battery box, including but not limited to improving the resistance to galvanic corrosion.

In this application, unless otherwise specified, "battery cell" refers to a basic unit capable of realizing conversion between chemical energy and electrical energy.

In some implementations, the battery cell is a fuel battery, a corresponding battery box is a fuel battery box, and a corresponding battery system is a fuel battery system.

In this application, unless otherwise specified, "fuel battery box" refers to a battery box with a fuel battery cell inside. In this application, unless otherwise specified, "fuel battery" has a well-known meaning in the art, and refers to a chemical apparatus that directly converts chemical energy of fuel into electrical energy; and "fuel battery cell" refers to a battery cell that directly converts chemical energy of fuel into electrical energy.

In some implementations, the battery cell belongs to a lithium battery, the corresponding battery box is a lithium battery box, and the corresponding battery system is a lithium battery system. In this case, active ions in the battery cell include lithium ions. The lithium battery may be a lithium-ion secondary battery.

In this application, unless otherwise specified, "lithium battery box" refers to a battery box with a lithium battery cell inside. In this application, unless otherwise specified, "lithium battery" has a well-known meaning in the art, and refers to a type of batteries where the active ions include lithium ions; and "lithium battery cell" refers to a battery cell where the active ions include lithium ions.

In some implementations, the battery cell is a secondary battery, the corresponding battery box is a secondary battery box, and the corresponding battery system is a secondary battery system. In some implementations, the battery cell may include a positive electrode plate, a negative electrode plate, and an electrolyte. During charging and discharging of a battery, active ions are intercalated and deintercalated back and forth between the positive electrode plate and the negative electrode plate. The electrolyte conducts active ions between the positive electrode plate and the negative electrode plate. In some implementations, the positive electrode plate, negative electrode plate, and separator may be made into an electrode assembly through a winding process or a lamination process.

When the battery cell in the battery system includes a liquid electrolyte, high requirements are imposed on the corrosion resistance of the battery box, and the aforementioned battery system and electric apparatus are more likely to meet storage and usage requirements.

The battery box includes at least one battery cell inside. The battery box may include one or more battery cells inside. The battery cell is not limited to any particular shape in this application, and may be cylindrical, prismatic, or of any other shapes. In some implementations, the battery cell may include an outer package.

The outer package of the battery cell may be configured to encapsulate the aforementioned electrode assembly and electrolyte, but is not limited thereto.

In some implementations, the outer package of the battery cell may be a hard shell, such as a hard plastic shell, aluminum shell, or steel shell. The outer package of the battery cell may alternatively be a soft pouch, such as a pouch-type soft package. The material of the soft pouch may be plastic. Further, non-limiting examples of plastic may include one or more of polypropylene, polybutylene terephthalate, and polybutylene succinate.

In some implementations, the outer package may include a shell and a cover plate. The shell may include a bottom plate and side plates connected to the bottom plate, where the bottom plate and the side plates enclose an accommodating cavity. The shell has an opening communicating with the accommodating cavity, and the cover plate can cover the opening to seal the accommodating cavity.

Without limitation, the aforementioned electrode assembly may be encapsulated in the accommodating cavity. In some implementations, the liquid electrolyte may infiltrate into the electrode assembly, and there may be one or more electrode assemblies contained in the battery cell. Those skilled in the art can make a selection according to actual needs.

The battery system may be a battery module 4 or a battery pack 1.

The battery module 4 includes at least one battery cell 5. There may be one or more battery cells 5 contained in the battery module 4, and those skilled in the art can select an appropriate quantity of the battery cells based on the application and capacity of the battery module.

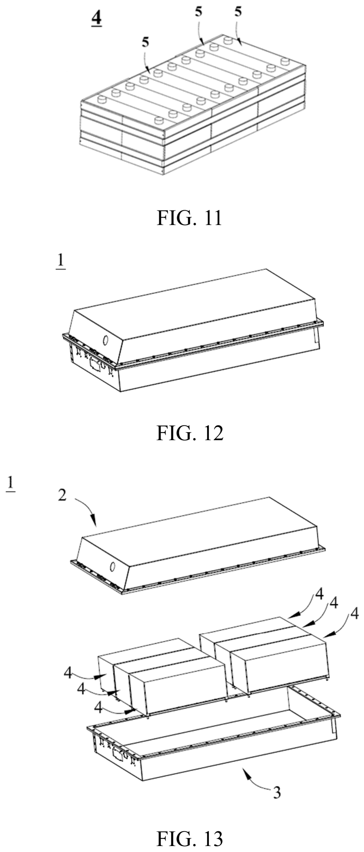

FIG. 11 shows a battery module 4 as an example. Referring to FIG. 11, in the battery module 4, multiple battery cells 5 may be sequentially arranged along a length direction of the battery module 4. Certainly, the battery cells 5 may alternatively be arranged in any other manner. Further, the multiple battery cells 5 may be fixed by a fastener. In some implementations, the battery module 4 may further include a housing with an accommodating space, and the multiple battery cells 5 are accommodated in the accommodating space.

In some implementations, the aforementioned battery module 4 can alternatively be assembled into a battery pack 1, and there may be one or more battery modules contained in the battery pack. Those skilled in the art can select an appropriate quantity based on the application and capacity of the battery pack.

In some implementations, the battery module 4 may include a battery box, where the battery box provides an accommodating space, with multiple battery cells 5 accommodated in the accommodating space.

FIG. 12 and FIG. 13 show a battery pack 1 as an example. Referring to FIG. 11 and FIG. 12, the battery pack 1 may include a battery box and multiple battery modules 4 disposed in the battery box. The battery box includes an upper box body 2 and a lower box body 3, where the upper box body 2 can cover the lower box body 3 to form a closed space for accommodating the battery modules 4. The multiple battery modules 4 may be arranged in the battery box in any manner.

The battery cell can be used as a power source for an electric apparatus or as an energy storage unit for an electric apparatus. The electric apparatus may include mobile devices (for example, mobile phones and laptops), electric vehicles (for example, battery electric vehicles, hybrid electric vehicles, plug-in hybrid electric vehicles, electric bicycles, electric scooters, electric golf carts, and electric trucks), electric trains, ships, satellites, energy storage systems, and the like, but is not limited thereto.

A battery cell or battery system can be selected for an electric apparatus based on usage requirements of the electric apparatus.

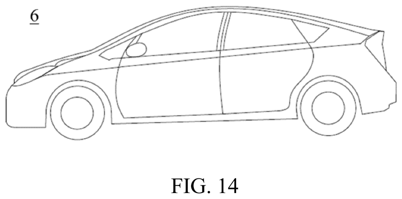

FIG. 14 shows an electric apparatus 6 as an example. The electric apparatus 6 is a battery electric vehicle, hybrid electric vehicle, a plug-in hybrid electric vehicle, or the like. To meet the high power and high energy density requirements of the electric apparatus on the battery cell or battery system, a battery pack or battery module can be used.

As another example, the electric apparatus may be a mobile phone, a tablet, a laptop, or the like. Such electric apparatus typically requires a lightweight design and may use a battery cell or battery system as a power source.

According to another aspect of this application, an application of the aluminum alloy material according to the first aspect of this application in preparation of at least one of a battery box, a battery cell, a secondary battery, and an electric apparatus.

The following describes some examples of this application. The examples described below are exemplary, are only used to explain this application, and are not construed as limiting this application. If techniques or conditions are not specified in the examples, they are performed according to the descriptions above, or performed according to the techniques or conditions described in the literature in the field, or performed according to product specifications. Reagents or instruments used without specifying the manufacturer are all conventional products that are commercially available or can be synthesized from commercially available products in a conventional manner. In the following examples, a same refining agent was used.

In the examples below, room temperature refers to 20°C-30°C.

I. Preparation of aluminum alloy material

(I) Preparation method

Taking the Mn element as an example, an ingredient corresponding to the Mn element (as shown in Table 1) is referred to as "Mn ingredient".

(1) A pure aluminum ingot was added to a smelting furnace, heated to 730°C to 750°C, and maintained at the temperature until molten; then an Mn ingredient was added; after the Mn ingredient was molten, a Cu ingredient was added; after the temperature was lowered to 700°C to 720°C, an Si ingredient, a portion of an Ti ingredient, a Zn ingredient, and a portion of an Sr ingredient were added for melting; after these elements were molten, an Mg ingredient was added at approximately 720°C; after the Mg ingredient was molten, a resulting mixture was left standing for slag removal; a refining agent was added; and after slag removal, the remaining Ti ingredient and the remaining Sr ingredient were added, followed by cast molding to obtain an ingot with a preset shape and a preset size. The preset shape and preset size were a sample size required for testing.

(2) The ingot was left standing, maintained at a temperature of 500°C to 600°C for 1.5 h to 2 h, and then water-cooled to room temperature; and the resulting aluminum alloy material was a die-cast aluminum alloy sample, which could be used as a main material or constituent material of a battery box, including but not limited to a main material or constituent material for a lithium battery box and a fuel battery box.

(II) Examples and comparative examples

Example 1.

(1) Selection of alloy composition

By mass percentage, the aluminum alloy material included the following constituent elements (nominal composition): Si: 8.5%, Cu: 0.7%, Ti: 0.3%, Mg: 0.4%, Zn: 0.5%, Mn: 1.0%, Sr: 0.04%, and the balance of Al. Reference may be made to Table 1.

The ingredient composition of each element was: $AlSi_{20}$ (Si ingredient), $AlCu_{50}$ (Cu ingredient), $AlTi_5$ (Ti ingredient), Zn (Zn ingredient), Mg (Mg ingredient), $AlMn_{10}$ (Mn ingredient), $AlSr_{10}$ (Sr ingredient), and Al. Taking 1 kilogram (kg) as an example, a burning loss rate of Zn was 12%, and a burning loss rate of Mg was 15%.

(2) Alloy smelting

A pure aluminum ingot was added to a smelting furnace, heated to 740°C, and maintained at the temperature until molten; then an Mn ingredient was added; after the Mn ingredient was molten, a Cu ingredient was added; after the temperature was lowered to 710°C, an Si ingredient, a Ti ingredient, a Zn ingredient, and an Sr ingredient were added for melting; after these elements were molten, an Mg ingredient was added; after the Mg ingredient was molten, a resulting mixture was left standing for slag removal; a refining agent was added; and after slag removal, the Ti ingredient and Sr ingredient were added, followed by cast molding to obtain an ingot.

(3) Heat treatment

The ingot was left standing at 550°C, maintained at the temperature for 2 h, and then water-cooled to room temperature to obtain an aluminum alloy material.

Example 2.

An aluminum alloy ingot and an aluminum alloy material were prepared using substantially the same method as in Example 1, except that the alloy composition was different.

By mass percentage, the aluminum alloy material included the following constituent elements (nominal composition): Cu: 0.7%, Ti: 0.1%, Mg: 0.5%, Zn: 0.3%, Mn: 0.8%, Sr: 0.04%, and the balance of Al.

Example 3.

An aluminum alloy ingot and an aluminum alloy material were prepared using substantially the same method as in Example 1, except that the alloy composition was different.

By mass percentage, the aluminum alloy material included the following constituent elements (nominal composition): Cu: 0.7%, Ti: 0.2%, Mg: 0.4%, Zn: 0.5%, Mn: 0.6%, Sr: 0.04%, and the balance of Al.

Example 4.

An aluminum alloy ingot and an aluminum alloy material were prepared using substantially the same method as in Example 1, except that step (2) was different.

Step (2) in Example 4 was as follows: A pure aluminum ingot was added to a smelting furnace, heated to 730°C, and maintained at the temperature until molten; then an Mn ingredient was added; after the Mn ingredient was molten, a Cu ingredient was added; after the temperature was lowered to 700°C, an Si ingredient, a Ti ingredient, a Zn ingredient, and an Sr ingredient were added for melting; after the above elements were molten, an Mg ingredient was added; after the Mg ingredient was molten, a resulting mixture was left standing for slag removal; a refining agent was added; and after slag removal, the Ti ingredient and Sr ingredient were added, followed by cast molding to obtain an ingot.

Example 5.

An aluminum alloy ingot and an aluminum alloy material were prepared using substantially the same method as in Example 1, except that step (2) was different.

Step (2) in Example 5 was as follows: A pure aluminum ingot was added to a smelting furnace, heated to 750°C, and maintained at the temperature until molten; an Mn ingredient was added; after the Mn ingredient was molten, a Cu ingredient was added; after the temperature was lowered to 720°C, an Si ingredient, a Ti ingredient, a Zn ingredient, and an Sr ingredient were added for melting; after these elements were molten, an Mg ingredient was added; after the Mg ingredient was molten, a resulting mixture was left standing for slag removal; a refining agent was added; and after slag removal, the Ti ingredient and Sr ingredient were added, followed by cast molding to obtain an ingot.

Example 6.

An aluminum alloy ingot and an aluminum alloy material were prepared using substantially the same method as in Example 1, except that step (3) was different.

Step (3) in Example 6 was as follows: The ingot was left standing at 500°C, maintained at the temperature for 1.75 h, and then water-cooled to room temperature to obtain an aluminum alloy material.

Example 7.

An aluminum alloy ingot and an aluminum alloy material were prepared using substantially the same method as in Example 1, except that step (3) was different.

Step (3) in Example 7 was as follows: The ingot was left standing at 600°C, maintained at the temperature for 2.25 h, and then water-cooled to room temperature to obtain an aluminum alloy material.

Example 8.

An aluminum alloy ingot and an aluminum alloy material were prepared using substantially the same method as in Example 1, except that step (3) was different.

Step (3) in Example 8 was as follows: The ingot was left standing at 450°C, maintained at the temperature for 2 h, and then water-cooled to room temperature to obtain an aluminum alloy material.

Example 9.

An aluminum alloy ingot and an aluminum alloy material were prepared using substantially the same method as in Example 1, except that step (3) was different.

Step (3) in Example 9 was as follows: The ingot was left standing at 550°C, maintained at the temperature for 1.25 h, and then water-cooled to room temperature to obtain an aluminum alloy material.

Comparative Example 1.

An aluminum alloy ingot and an aluminum alloy material were prepared using substantially the same method as in Example 1, except that the alloy composition for preparing the aluminum alloy ingot was different.

By mass percentage, the aluminum alloy material included the following constituent elements (nominal composition): Si: 7.5%, Cu: 3.0%, Mg: 0.1%, Zn: 0.2%, Mn: 0.02%, Fe: 0.7%, and the balance of Al.

Comparative Example 2.

An aluminum alloy ingot and an aluminum alloy material were prepared using substantially the same method as in Example 1, except that step (2) was different.

Step (2) in Comparative Example 2 was as follows: A pure aluminum ingot was added to a smelting furnace, heated to 800°C, and maintained at the temperature until molten; then an Mn ingredient was added; after the Mn ingredient was molten, a Cu ingredient was added; after the temperature was lowered to 750°C, an Si ingredient, a Ti ingredient, a Zn ingredient, and an Sr ingredient were added for melting; after these elements were molten, an Mg ingredient was added; after the Mg ingredient was molten, a resulting mixture was left standing for slag removal; a refining agent was added; and after slag removal, the Ti ingredient and Sr ingredient were added, followed by cast molding to obtain an ingot.

Comparative Example 3.

An aluminum alloy ingot and an aluminum alloy material were prepared using substantially the same method as in Example 1, except that the alloy composition was substantially consistent with that of A380 aluminum alloy.

The nominal compositions of the aluminum alloy materials in the examples and comparative examples are shown in Table 1.

**Table 1**

| Example No. | Nominal composition of aluminum alloy (designed element composition), by mass percentage | | | | | | | | |
|---|---|---|---|---|---|---|---|---|---|
| | Si (%) | Cu (%) | Ti (%) | Mg (%) | Zn (%) | Mn (%) | Sr (%) | Fe (%) | Content of Al |
| Example 1 | 8.5 | 0.7 | 0.3 | 0.4 | 0.5 | 1 | 0.04 | ≤0.7 | Matrix element |
| Example 2 | 6.5 | 0.7 | 0.1 | 0.5 | 0.3 | 0.8 | 0.04 | ≤0.7 | Matrix element |
| Example 3 | 10.5 | 0.7 | 0.2 | 0.4 | 0.5 | 0.6 | 0.04 | ≤0.7 | Matrix element |
| Example 4 | 8.5 | 0.7 | 0.3 | 0.4 | 0.5 | 1 | 0.04 | ≤0.7 | Matrix element |
| Example 5 | 8.5 | 0.7 | 0.3 | 0.4 | 0.5 | 1 | 0.04 | ≤0.7 | Matrix element |
| Example 6 | 8.5 | 0.7 | 0.3 | 0.4 | 0.5 | 1 | 0.04 | ≤0.7 | Matrix element |
| Example 7 | 8.5 | 0.7 | 0.3 | 0.4 | 0.5 | 1 | 0.04 | ≤0.7 | Matrix element |
| Example 8 | 8.5 | 0.7 | 0.3 | 0.4 | 0.5 | 1 | 0.04 | ≤0.7 | Matrix element |
| Example 9 | 8.5 | 0.7 | 0.3 | 0.4 | 0.5 | 1 | 0.04 | ≤0.7 | Matrix element |
| Comparative Example 1 | 7.5 | 0.3 | / | 0.1 | 0.2 | 0.02 | / | 0.7 | Matrix element |
| Comparative Example 2 | 8.5 | 0.7 | 0.3 | 0.4 | 0.5 | 1 | 0.04 | ≤0.7 | Matrix element |

For a chemical composition of the A380 aluminum alloy in Comparative Example 3, reference may be made to Table 2.

**Table 2 Element composition of A380 aluminum alloy**

| Element composition | Si | Cu | Mg | Fe | Mn | Zn | Ti | Other elements | Al |
|---|---|---|---|---|---|---|---|---|---|
| Mass percentage of element in alloy (wt%) | 7.5-9.5 | 3.0-4.0 | ≤0.1 | ≤2.0 | ≤0.5 | ≤3.0 | / | Sn: ≤0.35 | Bal. |

In Table 2, "/" indicates that the element composition is not actively added.

II. Testing and analysis methods

(I) Actual composition analysis

An inductively coupled plasma emission spectrometer (ICP instrument, Avio 5000) was used for elemental analysis to precisely measure an actual composition of the aluminum alloy material.

(II) Microstructure analysis

1. Phase analysis

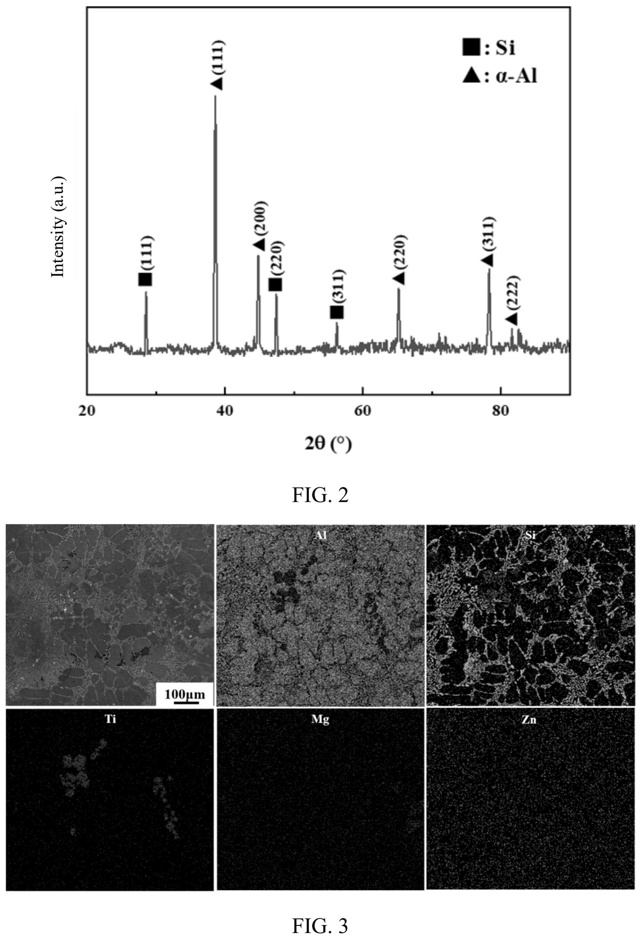

X-ray diffraction (XRD) was used to detect phases with a high content.
XRD testing instrument and parameters: D8 Advance Da Vinci X, Cu Kα1, scanning range (20): 20°-110°, and scanning speed: 5°/min.
It should be noted that in XRD phase detection, only phases with a content greater than 5wt% exhibited significant diffraction peaks. Low-content alloy phases of which the content was not greater than 5% were analyzed using an energy dispersive spectrometer (EDS, Energy Dispersive Spectrometer).
FESEM + EDS testing instrument and parameters: Field Emission Scanning Electron Microscope FEI NOVA NanoSEM 230, with an English name of "FESEM + EDS"; probe type (det): ETD; and acceleration voltage (HV): 15 kV. Other parameters were exemplified in FIG. 3. In FIG. 3, a magnification (mag) was 1000 times (1000×), a working distance (WD) was 6.5 mm, a horizontal field width (HFW) was 298 micrometers (μm), and a diameter of a spot (spot) was 5.5 nanometers (nm). An image obtained could also be denoted as a SEM-EDS image.

2. Metallographic structure analysis

Instrument and testing parameters: CX40M metallographic microscope, of which the magnifications include 25×, 100×, 20×, 200×, 500×, and 1000×, with other magnifications selectable.

3. Mass fraction analysis method for different alloy phases

Jmatpro simulation calculation was used.

(III) Mechanical property test and corrosion test

The aluminum alloy materials prepared in Examples 1 to 9 and Comparative Examples 1 to 3 were subjected to a hardness test, a tensile test, and a corrosion test in accordance with the method specified in GB/T 4340.1-1999 Metal Vickers Hardness Test-Part 1: Test Method.

1. Hardness test

Instrument: Hardness tester.
Testing parameter: Loading force was 0.1 kg.

2. Tensile test

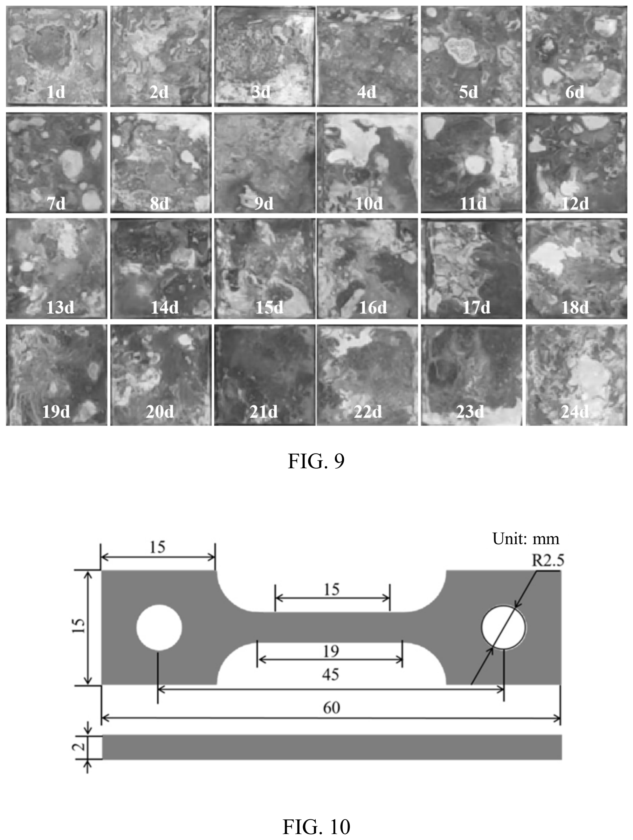

(1) A sample size was shown in FIG. 10 and measured in millimeters (mm), where R2.5 indicated a radius of 2.5 mm.
(2) Testing instrument: Z20 universal electronic testing machine.
(3) Testing and analysis method:

Aluminum alloy material tensile samples were wrapped with a blue film, leaving only a test surface exposed. The total test was performed for 600 h, where during the test, a batch of samples were taken every 24 h for tensile property testing, with at least three parallel samples set for each test.
Mechanical property testing was performed on tensile samples at different corrosion stages to obtain stress-strain curves, and then tensile strength (tensile strength, UTS for short, also referred to as tensile strength or ultimate tensile strength), elongation (elongation, El for short), and yield strength (yield strength, YS for short) were obtained through analysis. A larger elongation indicates better ductility of the material.

3. Corrosion test

(1) Electrochemical corrosion test

The electrochemical corrosion test included: open circuit voltage testing, alternating-current impedance testing, and potentiodynamic polarization testing.
Testing solution: 3.5wt% NaCl aqueous solution.
Before the test, a die-cast aluminum alloy was cut into samples of 10 mm × 10 mm × 2 mm, and each sample was cold-mounted with epoxy resin to ensure that only a 1 cm$^2$ test surface was exposed after mounting. The test surfaces were sequentially ground with sandpaper, then polished with a polishing agent until the surfaces were clean and shiny, cleaned with ethanol, and dried for later use.
During the test, the open circuit voltage (OCP) of each sample was first measured. After the OCP stabilized for 60 min, an alternating-current impedance test (EIS) was performed to measure an electrochemical impedance spectrum of the sample at different AC frequencies. A 10 mV alternating-current sine wave was used as an excitation voltage during the test, with a test frequency being controlled within 0.01 Hz-105 Hz.
After the test, EIS results were fitted with an equivalent circuit, and parameters of all components in the equivalent circuit diagram were analyzed. After the alternating-current impedance test, a potentiodynamic polarization test was performed on the sample. Starting from a potential of OCP-300 mV, scanning was performed at a scanning rate of 0.167 mV/s until a current exceeded 1 mA. After the test, ZSimpWin v3.40 software was used to perform Tafel fitting on polarization characteristics of the sample.

(2) Salt spray corrosion test

A 3.5wt% NaCl aqueous solution was used, tested at 35°C.

The macroscopic morphology, microscopic morphology, corrosion mass loss, and corrosion rate of a box material were analyzed every 24 h during a total test duration of 600 h.

Before the test, a non-test surface of a blocky aluminum alloy sample of 15 mm × 15 mm × 2 mm was wrapped with a blue film. The test surface was ground, polished, dried, and weighed, with a weight denoted as W0. The total test duration was 600 h. During the test, a batch of samples were taken every 24 h for observation of macroscopic surface morphology and microscopic surface morphology. After observation, a chromic acid cleaner (20 g/L $Cr_2O_3$ + 50 mL/L $H_3PO_4$) was used to remove corrosion products from the sample surface, then weighing was performed to calculate the corrosion rate, and morphology observation was performed. The test duration for the i-th sampling was denoted as Ti, the weight at the i-th sampling was denoted as Wi, and at least three parallel samples were set for each test.

(A) Macroscopic morphology testing method

Sample: Sampling corrosion time points were as described above.

Instrument: CX40M metallographic microscope. The aforementioned testing method could be used.

(B) Microscopic morphology testing method

Sample: Sampling corrosion time points were as described above.

Instrument: FEI NOVA NanoSEM 230. The aforementioned testing method could be used.

(C) Corrosion mass loss and corrosion rate analysis method

A mass loss for the i-th sampling was calculated as W = WO-Wi.

A corrosion rate Ri for the i-th sampling could be calculated using formula (I):

$$\text{Corrosion rate} = (K \times W) / (A \times Ti \times D) \text{ mm/y (I)}.$$

In formula (I): K = 8.64 × 104, and K is a time constant;

W is a difference of a mass before the test and a mass after the test, which is equal to WO-Wi, measured in mg;
A is a test surface area of 2.25 $cm^2$, measured in $cm^2$;
Ti is a test duration for the i-th sampling, measured in h;
D = 2.7 $g/cm^3$, where D is a material density; and
"mm/y" represents millimeters per year.

(3) Immersion corrosion test

A 3.5wt% NaCl aqueous solution was used.

Staged immersion corrosion included analyzing the macroscopic morphology, microscopic morphology, and corrosion rate of a box material every 10 d during a total test duration of 30 d. In this application, 1 d = 1 day.

Samples for the immersion corrosion test were blocks of 15 mm × 15 mm × 2 mm.

Before the test, a test surface was ground, polished, rinsed sequentially with deionized water and ethanol, dried, weighed, and stored in a drier for later use. During the test, each sample was placed in a container, and 500 mL corrosion solution was added. The composition of the corrosion solution was: 3.5wt% NaCl aqueous solution. The container was sealed and then placed in a constant-temperature water bath, with a temperature set to 25°C. The samples were taken every 10 d (to be specific, test durations were respectively 10 d, 20 d, and 30 d), and the macroscopic morphology and microscopic morphology of corroded sample surfaces were observed. Subsequently, corrosion products were removed from the sample surfaces, sample masses before and after corrosion were compared, and a corresponding immersion corrosion rate was calculated, where three parallel samples were set for each test.

III. Test result analysis

An experimental group of Example 1 was also referred to as "N1", and the prepared aluminum alloy material was also referred to as the N1 alloy.

(I) Nominal comparison and actual composition

Taking Example 1 as an example, ICP test results show that the actual composition of the aluminum alloy material was quite close to its nominal composition, indicating a good smelting effect. Reference may be made to Table 3.

Table 3 Nominal composition and actual composition table for aluminum alloy material in Example 1

| Element type | Element content (wt%) | | | | | | | | |
|---|---|---|---|---|---|---|---|---|---|
| | Si | Cu | Ti | Mg | Zn | Mn | Sr | Fe | Al |
| Nominal composition (Nominal composition) | 8.5 | 0.7 | 0.3 | 0.4 | 0.5 | 1.0 | 0.04 | 0.4 | Matrix element |
| Actual composition (Actual composition) | 8.01 | 0.6 9 | 0.47 | 0.35 | 0.45 | 0.98 | 0.02 | 0.23 | Matrix element |

In Table 3, element content refers to a mass percentage in the aluminum alloy material, measured in wt%.

(II) Phase analysis

Example 1 is used as an example for description.

A metallographic structure of the aluminum alloy material prepared in Example 1 can refer to FIG. 1. The $\alpha$-Al matrix phase is mainly distributed in a form of near-equiaxed crystals, the eutectic Si phase is distributed as a fine fibrous structure between $\alpha$-Al grains, and a small amount of other alloy phases were also included. Due to the addition of a small amount of Sr for modification, unlike the Al-Si eutectic structure in the A380 aluminum alloy of Comparative Example 3, the eutectic Si phase in the aluminum alloy material of Example 1 is transformed into a fibrous and granular morphology. Due to a significant reduction in Cu content in the alloy, no $Al_2Cu$ phase similar to that in the A380 alloy is observed. Due to low Mg and Zn contents, no obvious $Mg_2Si$ phase is observed as well. In addition, some circular or elliptical Ti-rich phases ($Al_3Ti$ phase), needle-like AlSiMnFe phases, or dendritic Mn-rich phases (AlSiMnFeCu phase) are found in the aluminum alloy material of Example 1.

An XRD pattern of the aluminum alloy material in Example 1 can refer to FIG. 2, where diffraction peaks are mainly from the $\alpha$-Al matrix phase and the Si phase, and no other alloy phases are detected, indicating a low content of other alloy phases. According to FIG. 1, a ratio of the Si phase to the $\alpha$-Al matrix phase is approximately 1:(8 to 9).

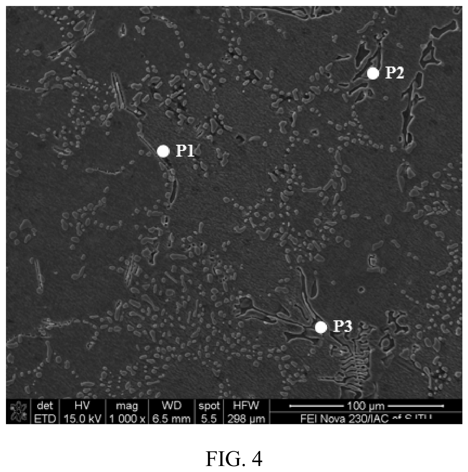

FIG. 3 is a microstructure and element distribution diagram of the aluminum alloy material in Example 1. The microstructure and element distribution of the aluminum alloy material in Example 1 can refer to the SEM-EDS image of FIG. 4. The Ti element is distributed in a circular or elliptical shape in the SEM image, which is a circular or elliptical alloy phase observed in the metallographic structure, with a composition of $Al_3Ti$ as a strengthening phase; the Si element is distributed in a fibrous or granular form in the SEM image, indicating a significant modification effect of Sr. In addition, for EDS point scan analysis of needle-like and dendritic alloy phases, reference may be made to FIG. 4 and Table 4. The needle-like phase is an AlSiMnFe phase, and the dendritic phase is a Cu-containing AlSiMnFe phase (that is, AlSiMnFeCu phase), where the addition of Cu causes the needle-like AlSiMnFe phase to grow larger and develop some elongated branches.

Table 4 EDS point chemical composition table for aluminum alloy material in Example 1 in FIG. 4

| Element type | Element content at position P1 (wt%) | Element content at position P2 (wt%) | Element content at position P3 (wt%) |
|---|---|---|---|
| Al | 80.10 | 80.06 | 77.89 |
| Si | 6.25 | 5.63 | 6.42 |
| Mn | 10.59 | 10.44 | 11.77 |
| Fe | 3.06 | 2.00 | 2.18 |
| Cu | - | 1.87 | 1.74 |

In Table 4, "-" indicates that the element is not detected.

Through simulation calculation, the mass fractions of different alloy phases in the examples respectively satisfy the following conditions.

(1) The mass fraction of the Al$_2$Cu phase in the aluminum alloy material is less than or equal to 1.3% and also falls within 0.1% to 1.3%, which falls within 0.8% to 1.3% in Example 1.

(2) The mass fraction of the Al$_3$Ti strengthening phase in the aluminum alloy material falls within 0.3% to 2% and also falls within 0.3% to 1%, which falls within 0.35% to 0.6% in Example 1.

(3) The mass fraction of the AlSiMnFe phase in the aluminum alloy material is less than or equal to 0.2% and is also less than or equal to 0.1%.

(4) The mass fraction of the Mg$_2$Si phase in the aluminum alloy material is less than or equal to 0.05% and is not detected in all examples, which can be essentially considered as 0%.

(III) Mechanical property test and corrosion test

According to the test results of mechanical property test and corrosion test, Examples 1 to 9 all exhibit good mechanical properties and excellent corrosion resistance which are significantly better than those of Comparative Examples 1 to 3.

Example 1 is used as an example to describe the test analysis results of each example.

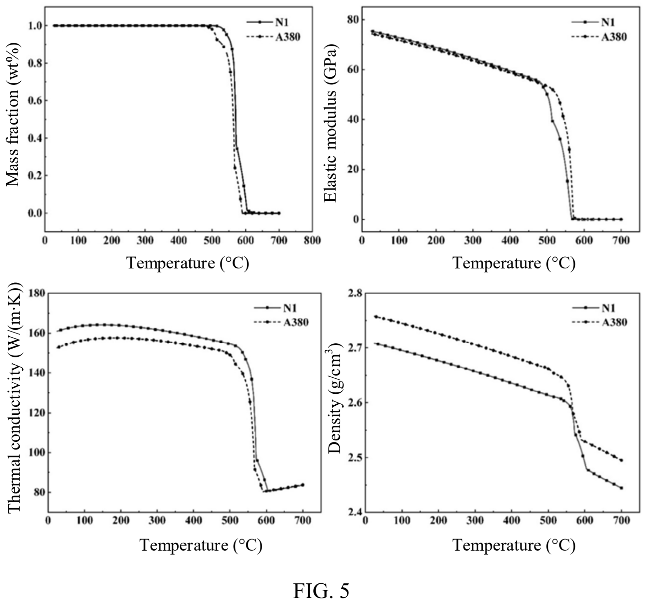

FIG. 5 is a curve showing changes in mass fraction, elastic modulus, thermal conductivity, and density of the A380 aluminum alloy and the aluminum alloy material (N1 alloy) in Example 1 with temperature, which is obtained through Jmatpro analysis; where the mass fraction refers to a mass fraction of the aluminum alloy material at different temperatures relative to an initial mass of the aluminum alloy material in an unheated state, reflecting a thermal weight loss of the aluminum alloy material. A solid-liquid temperature range of the N1 alloy is substantially similar to that of the A380 alloy, which is 480°C to 630°C; the elastic modulus of the N1 alloy is slightly higher than that of the A380 alloy, which is 75.37 GPa at room temperature; the thermal conductivity of the N2 alloy is higher than that of the A380 alloy, which is 160.94 W/m·K at room temperature; and the density of the N1 alloy is lower than that of the A380 alloy, which is 2.71 g/cm$^3$ at room temperature.

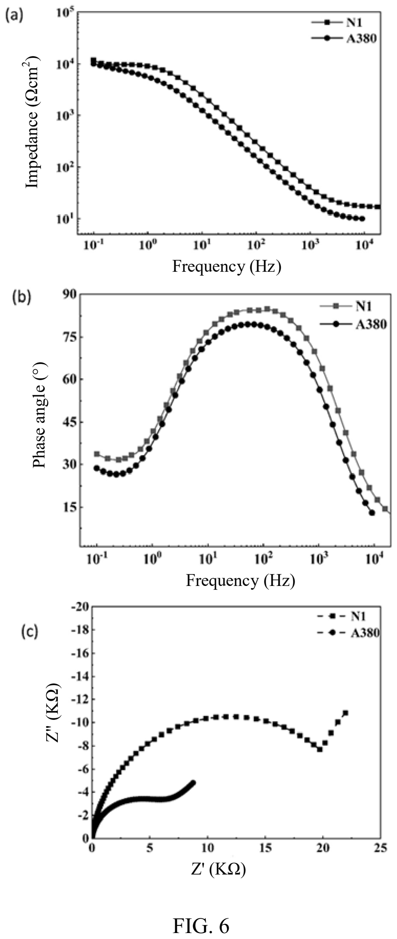

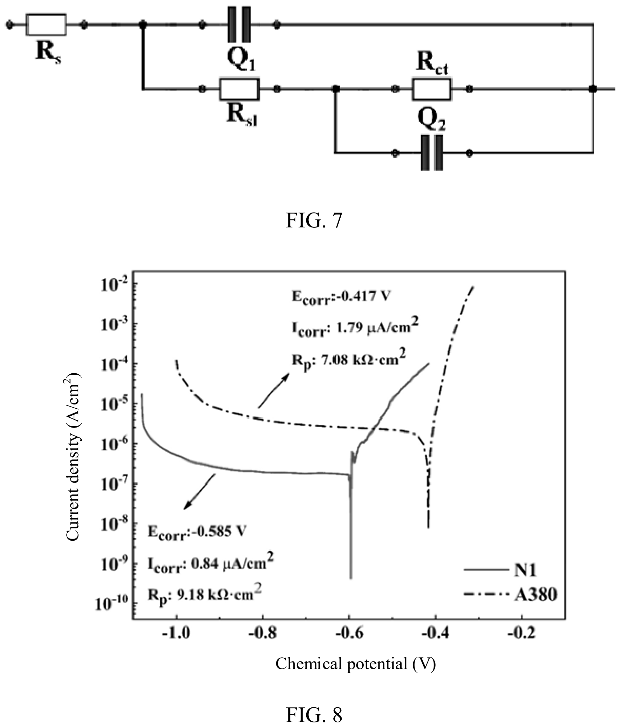

A result of an alternating-current impedance test of the aluminum alloy material (also referred to as N1) in Example 1 can refer to FIG. 6. Compared to the A380 alloy (in Comparative Example 3), no matter at a low frequency or high frequency, the aluminum alloy material in Example 1 exhibits higher impedance and larger phase angle, as shown in FIG. 6(a) and FIG. 6(b). Although the impedance of the A380 alloy is gradually close to that of the aluminum alloy material in Example 1 at a low frequency, it remains lower than the impedance of the aluminum alloy material in Example 1. In a Nyquest plot (FIG. 6(c)), the aluminum alloy material in Example 1 and the A380 alloy exhibit similar capacitance loop patterns. However, the aluminum alloy material in Example 1 has a larger capacitance loop diameter, indicating superior capacitance performance and higher charge transfer resistance. Fitting is performed using the equivalent circuit shown in FIG. 7, with results shown in Table 5. Both R$_{sl}$ and R$_{ct}$ of the alloy in the aluminum alloy material in Example 1 are higher than those of the A380 alloy, indicating better corrosion resistance.

In the equivalent circuit diagram in FIG. 7, R$_s$ represents a solution resistance related to a corrosion solution used in the test, and R$_{sl}$ and R$_{ct}$ represent a surface resistance and a charge transfer resistance of each alloy serving as a working electrode, respectively. In addition, a deviation of capacitance in EIS from ideal capacitance behavior is represented by a constant phase element (CPE), and n is used as an indicator to evaluate a degree of closeness between actual test and theoretical calculation. Q$_1$ and Q$_2$ respectively represent capacitances of a surface layer and a charge transfer layer during the establishment of a corrosion battery, corresponding to n$_1$ and n$_2$, respectively.

Table 5 EIS equivalent circuit parameter table for aluminum alloy material in Example 1 and A380 alloy in Comparative Example 3

| Parameter | R$_s$ (Ω) | Q$_1$(μF) | n$_1$ | R$_{sl}$ (kΩ) | R$_{ct}$ (kΩ) | Q$_2$ (μF) | n$_2$ |
|---|---|---|---|---|---|---|---|
| Aluminum alloy material in Example 1 | 10.46 | 113.7 | 0.942 | 6.27 | 7.06 | 13.2 | 0.935 |
| A380 | 12.37 | 91.4 | 0.985 | 4.67 | 5.59 | 12.5 | 0.965 |

A potentiodynamic polarization curve of the aluminum alloy material in Example 1 can refer to FIG. 8, with a horizontal axis representing a chemical potential (measured in V) and a vertical axis representing a current density (A/cm$^2$).

The potentiodynamic polarization curve of the aluminum alloy material (N1 alloy) in Example 1 is similar to the potentiodynamic polarization curve of the A380 alloy, and the N1 alloy does not exhibit passivation. Although a corrosion potential (E$_{corr}$) of the N1 alloy is lower than that of the A380 alloy, a corrosion current density (I$_{corr}$) of the N1 alloy is only 46.9% of that of the A380 alloy, and a polarization resistance (R$_p$) of the N1 alloy is also higher, indicating superior corrosion resistance compared to the A380 alloy.

A macroscopic surface morphology diagram of the aluminum alloy material (N1 alloy) in Example 1 at different corrosion times in the salt spray corrosion test can refer to FIG. 9. A corrosion rate of the aluminum alloy material (N1 alloy) in Example 1 is significantly lower than that of the A380 alloy, indicating that the N1 alloy has better corrosion resistance.

According to immersion corrosion test results, after 10 days, 20 days, and 30 days of corrosion, the corrosion rates of the aluminum alloy material (N1 alloy) in Example 1 are only 41.3%, 49%, and 50.5% of those of the A380 alloy, respectively, indicating quite superior corrosion resistance compared to the A380 alloy.

According to tensile test results, a tensile strength of the aluminum alloy material (N1 alloy) in Example 1 is improved compared to the A380 alloy, with an elongation reaching 5.42%, which is more than 2.5 times that of the A380 alloy under the same processing conditions. After 15 days of corrosion, the elongation of the N1 alloy still has higher elongation than the A380 alloy; and after 25 days of corrosion, the elongation still reaches 77.8% of that of the A380 alloy. After the same corrosion time, the strength and elongation of the A380 alloy are both lower than those of the new N1 alloy, indicating that the mechanical properties and corrosion resistance of the new alloy are superior to those of the A380 alloy. Reference may be made to Table 6.

Table 6 Comparison of mechanical properties of aluminum alloy material (N1 alloy) in Example 1 and A380 alloy in Comparative Example 3

| Alloy type | Yield strength (YS) (MPa) | Tensile strength (UTS) (MPa) | Elongation (El) (%) |
|---|---|---|---|
| A380 | 159 | 217 | 2.3 |
| N1 | 134.98 | 230.87 | 5.42 |
| A380-5d | 142 | 189 | 1.15 |
| N1-5d | 118.03 | 214.53 | 4.55 |
| A380-15d | 126 | 167 | 1.04 |
| N1-15d | 111.14 | 197.81 | 3.51 |
| A380-25d | 113 | 147 | 0.67 |
| N1-25d | 102.58 | 159.26 | 1.79 |

The mechanical property tests and corrosion rate analysis results of the examples and comparative examples are summarized in Table 7.

**Table 7**

| Experimental group | Hardness (HRc) | Tensile strength (MPa) | Elongation (%) | Corrosion rate (mm/y) |
|---|---|---|---|---|
| Example 1 (N1) | 51.32 | 230.87 | 5.42 | 0.06168 |
| Example 2 | 50.31 | 223.27 | 5.14 | 0.06235 |
| Example 3 | 50.85 | 227.41 | 5.26 | 0.06572 |
| Example 4 | 50.87 | 221.54 | 5.02 | 0.06251 |
| Example 5 | 50.99 | 230.71 | 5.34 | 0.06358 |
| Example 6 | 50.39 | 223.82 | 5.12 | 0.06232 |
| Example 7 | 48.62 | 213.58 | 5.26 | 0.0632 |
| Example 8 | 50.57 | 219.58 | 5.07 | 0.06179 |
| Example 9 | 51.16 | 216.89 | 5.34 | 0.06172 |
| Comparative Example 1 | 50.82 | 219.43 | 3.12 | 0.1492 |
| Comparative Example 2 | 50.27 | 206.51 | 4.21 | 0.07852 |
| Comparative Example 3 (A380) | 49.87 | 217 | 2.3 | 0.1507 |

Comparative Example 3 is used as an example to describe the test analysis results of the comparative examples.

In Comparative Example 3, the A380 alloy mainly includes a columnar or near-equiaxed $\alpha$-Al matrix phase and a fine Al-Si eutectic structure, as well as some bone-like or needle-like alloy phases close to the eutectic structure. In the A380 alloy, a portion of Cu is dissolved in the $\alpha$-Al matrix as a solid solution, while another portion forms a bone-like or needle-like Cu-rich phase, which is identified as an $Al_2Cu$ phase through elemental analysis.

The A380 die-cast aluminum alloy (in Comparative Example 3) is subjected to a salt spray corrosion test, and the macroscopic surface morphology of the sample at different corrosion times show that the A380 alloy exhibits severe corrosion, with a large amount of white corrosion products accumulated on the sample. Due to the occurrence of general corrosion, the alloy surface is quickly covered by the corrosion products in an early corrosion stage (1 d to 6 d). Subsequently, a coverage area and coverage thickness of the corrosion products on the surface both continuously increase along the corrosion time, and the sample surface exhibits a characteristic of transitioning from an initial dark corroded appearance to a coverage with a large amount of white corrosion products.

The microscopic structure results of the A380 die-cast aluminum alloy (in Comparative Example 3) in the early and late stages of the salt spray corrosion test show that the A380 alloy exhibits a uniform general corrosion morphology, and the A380 alloy has severe corrosion, with a large amount of corrosion products produced. There are a large amount of thick corrosion products on the surface of the A380 alloy.

The microscopic structure results of the A380 die-cast aluminum alloy (in Comparative Example 3) after removal of corrosion products show that numerous corrosion pits are distributed around the Al-Si eutectic structure of the A380 alloy, because the $Al_2Cu$ phase distributed close to the Al-Si eutectic structure further exacerbates the intergranular corrosion tendency of the Al-Si eutectic structure. Additionally, a small amount of Cu dissolved in the matrix as a solid solution increases a difference between an intergranular potential and an intragranular intergranular. In addition, the $Al_2Cu$ phase has a more positive potential, and the matrix phase with a high Cu content also has a more positive potential. In this case, the matrix phase with a low Cu content serves as a cathode phase, forming a local electrochemical microcell with the nearby Cu-rich matrix phase and $Al_2Cu$ phase, and causing continuous corrosion of a matrix phase portion of a Cu-lack solid solution, thereby leading to the disappearance of grain boundaries.

The analysis results of mass losses and corresponding corrosion rates of the A380 die-cast aluminum alloy (in Comparative Example 3) at different salt spray corrosion times show that the A380 alloy has both high corrosion weight loss and high corrosion rates.

According to the test analysis results of the tensile tests, the analysis of variation tendency of the mechanical properties with the corrosion time shows that the yield strength and tensile strength of the A380 alloy (in Comparative Example 3) decrease rapidly with the corrosion time, particularly in the early corrosion stage (1 d to 4 d), and the yield strength and tensile strength drop to 77.5% and 76% of the values before corrosion, respectively. Subsequently, performance degradation rate decreases, and the final yield strength and tensile strength drop to 65.4% and 52.5% of the values before corrosion, respectively.

The descriptions of the various implementations and embodiments above tend to emphasize the differences between the implementations and embodiments, and their similarities or identical aspects may refer to each other. For brevity, details are not described herein again.

The technical features of the implementations or embodiments described above can be arbitrarily combined. For brevity of the description, not all possible combinations of the technical features in the above implementations or embodiments are described. However, as long as there is no contradiction in the combinations of these technical features, they should be considered within the scope described in this specification.

It should be noted that this application is not limited to the above implementations and embodiments. The above implementations and embodiments are merely exemplary, and implementations having substantially the same configuration as the technical idea and achieving the same effects within the scope of the technical solutions of this application are included in the technical scope of this application. The above implementations and embodiments only express several implementations of this application, and their descriptions are relatively detailed but are not to be construed as limiting the scope of the patent. Furthermore, various modifications that can be conceived by those skilled in the art without departing from the spirit of this application, as well as other methods constructed by combining some constitution elements of the implementations or embodiments, are also included within the scope of this application.

**Claims**

1. An aluminum alloy material, wherein by mass percentage, the aluminum alloy material comprises the following constituent elements: 6%-11% of Si, 0.5%-0.9% of Cu, 0.1%-0.4% of Ti, 0.2%-0.6% of Mg, 0.25%-0.6% of Zn, 0.5%-1.1% of Mn, 0.01%-0.05% of Sr, a matrix element Al, and unavoidable impurity elements; wherein the aluminum alloy material comprises or does not comprise an $Al_2Cu$ phase, and a mass fraction of the $Al_2Cu$ phase in the aluminum alloy material is less than or equal to 1.3%.

2. The aluminum alloy material according to claim 1, satisfying one or two of the following characteristics:

   a mass percentage of Cu element in the aluminum alloy material is 0.5% to 0.8%; and

the aluminum alloy material comprises the $Al_2Cu$ phase, and the mass fraction of the $Al_2Cu$ phase in the aluminum alloy material is 0.1% to 1.3%.

3. The aluminum alloy material according to claim 1 or 2, satisfying one or two of the following characteristics:

   a mass percentage of Cu element in the aluminum alloy material is 0.6% to 0.8%; and
   the aluminum alloy material comprises the $Al_2Cu$ phase, and the mass fraction of the $Al_2Cu$ phase in the aluminum alloy material is 0.8% to 1.3%.

4. The aluminum alloy material according to any one of claims 1 to 3, wherein the aluminum alloy material comprises a fibrous Al-Si eutectic structure; and
   the aluminum alloy material comprises an $Al_3Ti$ strengthening phase.

5. The aluminum alloy material according to claim 4, satisfying one, two, or three of the following characteristics:

   a mass percentage of Si element in the aluminum alloy material is 6.5% to 11%;
   a mass percentage of Ti element in the aluminum alloy material is 0.2% to 0.4%; and
   a mass fraction of the $Al_3Ti$ strengthening phase in the aluminum alloy material is 0.3% to 2%.

6. The aluminum alloy material according to claim 4 or 5, satisfying one, two, or three of the following characteristics:

   a mass percentage of Si element in the aluminum alloy material is 8% to 11%;
   a mass percentage of Ti element in the aluminum alloy material is 0.25% to 0.4%; and
   a mass fraction of the $Al_3Ti$ strengthening phase in the aluminum alloy material is 0.3% to 1%, optionally 0.35% to 0.6%.

7. The aluminum alloy material according to any one of claims 1 to 6, wherein the aluminum alloy material comprises or does not comprise an $Mg_2Si$ phase, and a mass fraction of the $Mg_2Si$ phase in the aluminum alloy material is less than or equal to 0.05%, optionally 0%.

8. The aluminum alloy material according to claim 7, satisfying one, two, or three of the following characteristics:

   a mass percentage of Mg element in the aluminum alloy material is 0.3% to 0.6%;
   a mass percentage of Zn element in the aluminum alloy material is 0.3% to 0.6%; and
   a mass ratio of Mg element to Zn element in the aluminum alloy material is 1:(1.1-1.3).

9. The aluminum alloy material according to claim 7 or 8, satisfying one or two of the following characteristics:

   a mass percentage of Mg element in the aluminum alloy material is 0.3% to 0.5%;
   a mass percentage of Zn element in the aluminum alloy material is 0.4% to 0.6%; and
   a mass ratio of Mg element to Zn element in the aluminum alloy material is 1:(1.1-1.25).

10. The aluminum alloy material according to any one of claims 1 to 9, wherein the unavoidable impurity elements comprise Fe element.

11. The aluminum alloy material according to any one of claims 1 to 10, satisfying one or two of the following characteristics:

    a mass percentage of Mn element in the aluminum alloy material is 0.7% to 1.1%, optionally 0.8% to 1.1%; and
    the aluminum alloy material comprises an AlSiMnFe phase; a mass fraction of the AlSiMnFe phase in the aluminum alloy material is less than or equal to 0.2%, optionally less than or equal to 0.1%; and optionally, the aluminum alloy material comprises an AlSiMnFe phase.

12. The aluminum alloy material according to any one of claims 1 to 11, wherein a mass proportion of Sr element in the aluminum alloy material is 200 ppm to 500 ppm.

13. The aluminum alloy material according to any one of claims 1 to 12, wherein by mass percentage, the aluminum alloy material comprises the following constituent elements: 6%-11% of Si, 0.5%-0.9% of Cu, 0.1%-0.4% of Ti, 0.3%-0.6% of Mg, 0.3%-0.6% of Zn, 0.5%-1.1% of Mn, 0.01%-0.05% of Sr, unavoidable impurity elements, and the balance of matrix element Al.

14. The aluminum alloy material according to claim 13, wherein by mass percentage, the aluminum alloy material comprises the following constituent elements: 6.5%-11% of Si, 0.5%-0.8% of Cu, 0.2%-0.4% of Ti, 0.3%-0.6% of Mg, 0.3%-0.6% of Zn, 0.7%-1.1% of Mn, 0.02%-0.05% of Sr, unavoidable impurity elements, and the balance of matrix element Al.

15. The aluminum alloy material according to claim 13, wherein by mass percentage, the aluminum alloy material comprises the following constituent elements: 8%-11% of Si, 0.6%-0.8% of Cu, 0.25%-0.4% of Ti, 0.3%-0.5% of Mg, 0.4%-0.6% of Zn, 0.8%-1.1% of Mn, 0.03%-0.05% of Sr, unavoidable impurity elements, and the balance of matrix element Al.

16. An aluminum alloy structural component, wherein the aluminum alloy structural component is a formed body of the aluminum alloy material according to any one of claims 1 to 15.

17. A preparation method of an aluminum alloy structural component, comprising the following steps:

heating and melting an aluminum ingot, adding ingredients determined according to a nominal composition of the aluminum alloy material according to any one of claims 1 to 15 in a form of intermediate alloys, and performing melting and slag removal to prepare a refined aluminum alloy melt;
performing cast molding on the refined aluminum alloy melt to prepare an aluminum alloy ingot; and
performing heat treatment and cooling on the aluminum alloy ingot to obtain the aluminum alloy structural component.

18. A battery box, wherein the battery box satisfies at least one of the following characteristics:

at least part of structural components in the battery box comprise the aluminum alloy material according to any one of claims 1 to 15;
the battery box comprises the aluminum alloy structural component according to claim 16; and
the battery box comprises an aluminum alloy structural component prepared by the preparation method of an aluminum alloy structural component according to claim 17.

19. A battery system, wherein the battery system comprises the battery box according to claim 18 and a battery cell located inside the battery box.

20. The battery system according to claim 19, wherein the battery cell comprises a liquid electrolyte.

21. An electric apparatus, comprising at least one of the aluminum alloy material according to any one of claims 1 to 15, the aluminum alloy structural component according to claim 16, an aluminum alloy structural component prepared by the preparation method of an aluminum alloy structural component according to claim 17, the battery box according to claim 18, and the battery system according to claim 19 or 20.

22. An application of the aluminum alloy material according to any one of claims 1 to 15 in preparation of at least one of an aluminum alloy structural component, a battery box, a battery system, and an electric apparatus.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

6

FIG. 14

## INTERNATIONAL SEARCH REPORT

| International application No. |
|---|
| **PCT/CN2024/116855** |

**A. CLASSIFICATION OF SUBJECT MATTER**

C22C21/02(2006.01)i; C22C21/04(2006.01)i; C22C1/03(2006.01)i; C22C1/06(2006.01)i; H01M50/224(2021.01)i

According to International Patent Classification (IPC) or to both national classification and IPC

**B. FIELDS SEARCHED**

Minimum documentation searched (classification system followed by classification symbols)

IPC: C22C H01M

Documentation searched other than minimum documentation to the extent that such documents are included in the fields searched

Electronic data base consulted during the international search (name of data base and, where practicable, search terms used)

WPABSC; CNTXT; ENTXTC; DWPI; USTXT; JPTXT: 宁德时代新能源科技, 上海交通大学, 贾俊, 铝合金, 硅, 铜, 钛, 镁, 锌, 锰, 锶, 共晶, 热处理, 结构件, 电池, 箱体, aluminium, alloys, Si, silicon, Cu, copper, Ti, titanium, Mg, magnesium, Zn, zinc, Mn, manganese, Sr, strontium, eutectic, heat, treatment, structural, parts, batteries, cases

**C. DOCUMENTS CONSIDERED TO BE RELEVANT**

| Category* | Citation of document, with indication, where appropriate, of the relevant passages | Relevant to claim No. |
|---|---|---|
| X | US 2017016092 A1 (ALCOA INC.) 19 January 2017 (2017-01-19) description, paragraphs 4-20 and 37-54, and figure 3 | 1-17, 22 |
| Y | US 2017016092 A1 (ALCOA INC.) 19 January 2017 (2017-01-19) description, paragraphs 4-20 and 37-54, and figure 3 | 18-22 |
| Y | CN 116555642 A (SHANGHAI JIAO TONG UNIVERSITY et al.) 08 August 2023 (2023-08-08) claims 8-10 | 18-22 |
| X | WO 2013063488 A2 (ALCOA INC. et al.) 02 May 2013 (2013-05-02) claims 1-13 | 1-17 |
| A | CN 113957302 A (SUZHOU HYSPEED LIGHT ALLOY PROCESSING TECHNOLOGY CO., LTD.) 21 January 2022 (2022-01-21) entire document | 1-22 |
| A | CN 115287506 A (UNIVERSITY OF SCIENCE AND TECHNOLOGY BEIJING) 04 November 2022 (2022-11-04) entire document | 1-22 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 December 2024** | **11 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/116855** |

| C. | DOCUMENTS CONSIDERED TO BE RELEVANT | |
| --- | --- | --- |
| Category* | Citation of document, with indication, where appropriate, of the relevant passages | Relevant to claim No. |
| A | CN 116657004 A (CONTEMPORARY AMPEREX TECHNOLOGY CO., LTD.) 29 August 2023 (2023-08-29)<br>entire document | 1-22 |

Form PCT/ISA/210 (second sheet) (July 2022)

## INTERNATIONAL SEARCH REPORT
### Information on patent family members

International application No.

**PCT/CN2024/116855**

| Patent document cited in search report | | | Publication date (day/month/year) | Patent family member(s) | | | Publication date (day/month/year) |
|---|---|---|---|---|---|---|---|
| US | 2017016092 | A1 | 19 January 2017 | ES | 2694519 | T3 | 21 December 2018 |
| | | | | BR | 112016014362 | A2 | 08 August 2017 |
| | | | | EP | 3084027 | A2 | 26 October 2016 |
| | | | | EP | 3084027 | B1 | 31 October 2018 |
| | | | | MX | 2016008166 | A | 29 September 2016 |
| | | | | US | 10227679 | B2 | 12 March 2019 |
| | | | | CA | 2932867 | A1 | 27 August 2015 |
| | | | | CA | 2932867 | C | 21 June 2022 |
| | | | | JP | 2017508065 | A | 23 March 2017 |
| | | | | EP | 3461922 | A1 | 03 April 2019 |
| | | | | WO | 2015126515 | A2 | 27 August 2015 |
| | | | | PL | 3084027 | T3 | 30 April 2019 |
| CN | 116555642 | A | 08 August 2023 | None | | | |
| WO | 2013063488 | A2 | 02 May 2013 | WO | 2013063488 | A3 | 31 October 2013 |
| | | | | MX | 2014005099 | A | 12 February 2015 |
| | | | | MX | 347730 | B | 11 May 2017 |
| | | | | ES | 2607728 | T3 | 03 April 2017 |
| | | | | EP | 2771493 | B1 | 14 September 2016 |
| | | | | CA | 2853728 | A1 | 02 May 2013 |
| | | | | CA | 2853728 | C | 25 May 2021 |
| | | | | PL | 2771493 | T3 | 31 August 2017 |
| | | | | BR | 112014010030 | A2 | 25 April 2017 |
| | | | | BR | 112014010030 | B1 | 06 November 2018 |
| CN | 113957302 | A | 21 January 2022 | None | | | |
| CN | 115287506 | A | 04 November 2022 | CN | 115287506 | B | 21 March 2023 |
| CN | 116657004 | A | 29 August 2023 | CN | 116657004 | B | 05 January 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023116079934